# EUROPEAN PATENT SPECIFICATION

(11) **EP 4 315 949 B1**
(45) Date of publication and mention of the grant of the patent: **29.07.2026**
(21) Application number: 22709438.0
(22) Date of filing: 03.02.2022
(51) Int. Cl.: H04W 24/10, G01S 5/00, G01S 5/02, H04W 64/00

(54) **PRS MEASUREMENT REPORT CONTENT AND/OR REQUEST**
PRS-MESSBERICHTSINHALT UND/ODER -ANFRAGE
CONTENU ET/OU DEMANDE DE RAPPORT DE MESURE PRS

(30) Priority: 30.03.2021 GR 20210100212
(43) Date of publication of application: 07.02.2024
(73) Proprietor: QUALCOMM INCORPORATED, San Diego, California 92121-1714 (US)
(72) Inventor: MANOLAKOS, Alexandros, San Diego, California 92121 (US); KUMAR, Mukesh, San Diego, California 92121 (US); YERRAMALLI, Srinivas, San Diego, California 92121 (US)
(74) Representative: Reddie & Grose LLP
(86) International application number: PCT/US2022/015101
(87) International publication number: WO 2022/211901

(56) References cited:
- WO-A1-2020/064698
- US-A1- 2021 067 990
- "3rd Generation Partnership Project; Technical Specification Group Radio Access Network; NG Radio Access Network (NG-RAN); Stage 2 functional specification of User Equipment (UE) positioning in NG-RAN (Release 15)", vol. RAN WG2, no. V15.8.0, 29 March 2021 (2021-03-29), pages 1 - 72, XP052000117, Retrieved from the Internet <URL:https://ftp.3gpp.org/Specs/archive/38_series/38.305/38305-f80.zip> [retrieved on 20210329]
- QUALCOMM INCORPORATED: "Considerations on Phy-layer procedures for NR Positioning", vol. RAN WG1, no. Reno, USA; 20190513 - 20190517, 13 May 2019 (2019-05-13), XP051728739, Retrieved from the Internet <URL:http://www.3gpp.org/ftp/Meetings%5F3GPP%5FSYNC/RAN1/Docs/R1%2D1907299%2Ezip> [retrieved on 20190513]

## Description

### BACKGROUND

Wireless communication systems have developed through various generations, including a first-generation analog wireless phone service (1G), a second-generation (2G) digital wireless phone service (including interim 2.5G and 2.75G networks), a third-generation (3G) high speed data, Internet-capable wireless service, a fourth-generation (4G) service (e.g., Long Term Evolution (LTE) or WiMax), a fifth-generation (5G) service, etc. There are presently many different types of wireless communication systems in use, including Cellular and Personal Communications Service (PCS) systems. Examples of known cellular systems include the cellular Analog Advanced Mobile Phone System (AMPS), and digital cellular systems based on Code Division Multiple Access (CDMA), Frequency Division Multiple Access (FDMA), Orthogonal Frequency Division Multiple Access (OFDMA), Time Division Multiple Access (TDMA), the Global System for Mobile access (GSM) variation of TDMA, etc.

A fifth generation (5G) mobile standard calls for higher data transfer speeds, greater numbers of connections, and better coverage, among other improvements. The 5G standard, according to the Next Generation Mobile Networks Alliance, is designed to provide data rates of several tens of megabits per second to each of tens of thousands of users, with 1 gigabit per second to tens of workers on an office floor. Several hundreds of thousands of simultaneous connections should be supported in order to support large sensor deployments. Consequently, the spectral efficiency of 5G mobile communications should be significantly enhanced compared to the current 4G standard. Furthermore, signaling efficiencies should be enhanced and latency should be substantially reduced compared to current standards.

3GPP TS 38.305 v15.8.0 (2021-03) Technical Specification, 3rd Generation Partnership Project, Technical Specification Group Radio Access Network, NG Radio Access Network (NG-Ran), Stage 2 functional specification of UE positioning in NG-RAN, 29 March 2021 describes in section 8.2.3.3.1 LMF-initiated location Information Transfer Procedure. The LMF sends and LPP Request Location Information message to the UE. This request includes indication of OTDOA measurements requested, including any needed measurement configuration information, and required response time. The UE obtains OTDOA measurements as requested and sends an LPP Provide Location Information message to the LMF, before the response time is elapsed, and includes the obtained OTDOA measurements. If the UE is unable to perform the requested measurement, or the Response Time elapsed before any of the requested measurements were obtained, the UE returns any information that can be provided in an LPP message of type Provide Location Information which includes a cause indication for the not provided location information.

US2021/067990 describes measurement gaps for positioning measurements outside a bandwidth part.

WO2020/064698 describes adapting operations in flexible allocation slots partially overlapping with measurement gaps.

R1-1907299 "Considerations on Phy-layer procedures for NR Positioning" by Qualcomm Incorporated, 3GPP TSG RAN WG1 #97. Reno. 13-17 May 2019 describes proposals for PRS measurements outside active BWP, DL Beam Management, a concept of collection of PRS resource sets, UL Beam Management and UL Timing Advance.

US2018/295600 describes dynamic measurement gap configuration for inter-frequency positioning measurement.

### SUMMARY

The invention is defined in the appended independent claims. Optional features are defined in the dependent claims.

### BRIEF DESCRIPTION OF THE DRAWINGS

FIG. 1 is a simplified diagram of an example wireless communications system.
FIG. 2 is a block diagram of components of an example user equipment shown in FIG. 1.
FIG. 3 is a block diagram of components of an example transmission/reception point.
FIG. 4 is a block diagram of components of an example server, various embodiments of which are shown in FIG. 1.
FIG. 5 is a block diagram of an example user equipment.
FIG. 6 is a block diagram of an example network entity.
FIG. 7 is a nested diagram showing scheduled PRS (positioning reference signal) resources compared to measured resources compared to reported resource measurements.
FIG. 8 is a signaling and process flow for providing and measuring PRS resources, requesting reporting of PRS resource measurement, and reporting PRS resource measurement.
FIG. 9 is a time and frequency diagram of positioning reference signals of varying degrees of processing.
FIG. 10 is a block diagram of a hierarchical priority for measuring and/or reporting PRS resources.
FIG. 11 is a flowchart of measuring PRS resources and reporting PRS resource measurements absent a request for one or more PRS resources or in view of a request for one or more PRS resources.
FIG. 12 is a block flow diagram of a method of measurement reporting for determination of a position of a user equipment.
FIG. 13 is a block flow diagram of a method of measuring PRS.
FIG. 14 is a block flow diagram of a method of requesting position information.
FIG. 15 is a time and frequency diagram of positioning reference signal resources relative to a specified time window.

### DETAILED DESCRIPTION

Techniques are discussed herein for measuring PRS (positioning reference signal(s)) and reporting PRS measurements, and requesting reporting of PRS measurements. For example, a location server may request reporting of suggested PRS. The suggested PRS may be explicitly suggested (e.g., identified/specified) and/or implicitly suggested (e.g., correspond to an indicated time window). A UE (user equipment) may prioritize reporting and possibly measurement of PRS based on the suggested PRS. As another example, a UE may measure PRS and report a subset of the measurements and indicate the measured but unreported PRS. As another example, a location server may adjust PRS scheduling and/or request reporting of suggested PRS based on the indicated measured but unreported PRS. These are examples, and other examples may be implemented.

Items and/or techniques described herein may provide one or more of the following capabilities, as well as other capabilities not mentioned. Positioning accuracy and/or latency may be improved, e.g., by obtaining desired PRS measurements. Energy may be conserved providing and/or measuring PRS and/or reporting PRS measurements, e.g., by scheduling and/or measuring selected PRS based on prior PRS measurement reporting and/or based on requested PRS measurement reporting. Other capabilities may be provided and not every implementation according to the disclosure must provide any, let alone all, of the capabilities discussed.

Obtaining the locations of mobile devices that are accessing a wireless network may be useful for many applications including, for example, emergency calls, personal navigation, consumer asset tracking, locating a friend or family member, etc. Existing positioning methods include methods based on measuring radio signals transmitted from a variety of devices or entities including satellite vehicles (SVs) and terrestrial radio sources in a wireless network such as base stations and access points. It is expected that standardization for the 5G wireless networks will include support for various positioning methods, which may utilize reference signals transmitted by base stations in a manner similar to which LTE wireless networks currently utilize Positioning Reference Signals (PRS) and/or Cell-specific Reference Signals (CRS) for position determination.

The description may refer to sequences of actions to be performed, for example, by elements of a computing device. Various actions described herein can be performed by specific circuits (e.g., an application specific integrated circuit (ASIC)), by program instructions being executed by one or more processors, or by a combination of both. Sequences of actions described herein may be embodied within a non-transitory computer-readable medium having stored thereon a corresponding set of computer instructions that upon execution would cause an associated processor to perform the functionality described herein. Thus, the various aspects described herein may be embodied in a number of different forms, all of which are within the scope of the disclosure, including claimed subject matter.

As used herein, the terms "user equipment" (UE) and "base station" are not specific to or otherwise limited to any particular Radio Access Technology (RAT), unless otherwise noted. In general, such UEs may be any wireless communication device (e.g., a mobile phone, router, tablet computer, laptop computer, consumer asset tracking device, Internet of Things (IoT) device, etc.) used by a user to communicate over a wireless communications network. A UE may be mobile or may (e.g., at certain times) be stationary, and may communicate with a Radio Access Network (RAN). As used herein, the term "UE" may be referred to interchangeably as an "access terminal" or "AT," a "client device," a "wireless device," a "subscriber device," a "subscriber terminal," a "subscriber station," a "user terminal" or UT, a "mobile terminal," a "mobile station," a "mobile device," or variations thereof. Generally, UEs can communicate with a core network via a RAN, and through the core network the UEs can be connected with external networks such as the Internet and with other UEs. Of course, other mechanisms of connecting to the core network and/or the Internet are also possible for the UEs, such as over wired access networks, WiFi networks (e.g., based on IEEE (Institute of Electrical and Electronics Engineers) 802.11, etc.) and so on.

A base station may operate according to one of several RATs in communication with UEs depending on the network in which it is deployed. Examples of a base station include an Access Point (AP), a Network Node, a NodeB, an evolved NodeB (eNB), or a general Node B (gNodeB, gNB). In addition, in some systems a base station may provide purely edge node signaling functions while in other systems it may provide additional control and/or network management functions.

UEs may be embodied by any of a number of types of devices including but not limited to printed circuit (PC) cards, compact flash devices, external or internal modems, wireless or wireline phones, smartphones, tablets, consumer asset tracking devices, asset tags, and so on. A communication link through which UEs can send signals to a RAN is called an uplink channel (e.g., a reverse traffic channel, a reverse control channel, an access channel, etc.). A communication link through which the RAN can send signals to UEs is called a downlink or forward link channel (e.g., a paging channel, a control channel, a broadcast channel, a forward traffic channel, etc.). As used herein the term traffic channel (TCH) can refer to either an uplink / reverse or downlink / forward traffic channel.

As used herein, the term "cell" or "sector" may correspond to one of a plurality of cells of a base station, or to the base station itself, depending on the context. The term "cell" may refer to a logical communication entity used for communication with a base station (for example, over a carrier), and may be associated with an identifier for distinguishing neighboring cells (for example, a physical cell identifier (PCID), a virtual cell identifier (VCID)) operating via the same or a different carrier. In some examples, a carrier may support multiple cells, and different cells may be configured according to different protocol types (for example, machine-type communication (MTC), narrowband Internet-of-Things (NB-IoT), enhanced mobile broadband (eMBB), or others) that may provide access for different types of devices. In some examples, the term "cell" may refer to a portion of a geographic coverage area (for example, a sector) over which the logical entity operates.

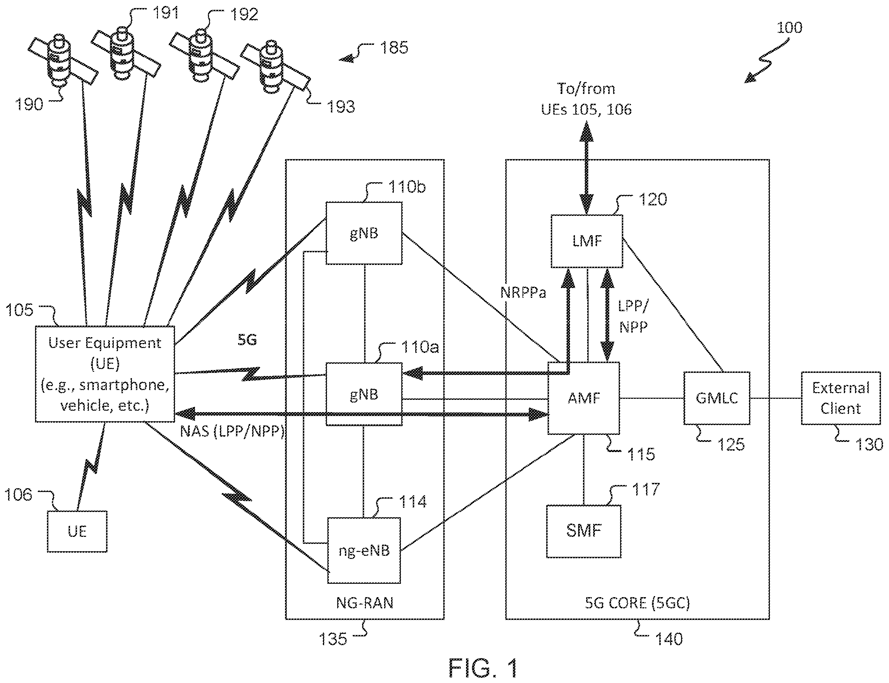

Referring to FIG. 1, an example of a communication system 100 includes a UE 105, a UE 106, a Radio Access Network (RAN) 135, here a Fifth Generation (5G) Next Generation (NG) RAN (NG-RAN), and a 5G Core Network (5GC) 140. The UE 105 and/or the UE 106 may be, e.g., an IoT device, a location tracker device, a cellular telephone, a vehicle (e.g., a car, a truck, a bus, a boat, etc.), or other device. A 5G network may also be referred to as a New Radio (NR) network; NG-RAN 135 may be referred to as a 5G RAN or as an NR RAN; and 5GC 140 may be referred to as an NG Core network (NGC). Standardization of an NG-RAN and 5GC is ongoing in the 3^{rd} Generation Partnership Project (3GPP). Accordingly, the NG-RAN 135 and the 5GC 140 may conform to current or future standards for 5G support from 3GPP. The NG-RAN 135 may be another type of RAN, e.g., a 3G RAN, a 4G Long Term Evolution (LTE) RAN, etc. The UE 106 may be configured and coupled similarly to the UE 105 to send and/or receive signals to/from similar other entities in the system 100, but such signaling is not indicated in FIG. 1 for the sake of simplicity of the figure. Similarly, the discussion focuses on the UE 105 for the sake of simplicity. The communication system 100 may utilize information from a constellation 185 of satellite vehicles (SVs) 190, 191, 192, 193 for a Satellite Positioning System (SPS) (e.g., a Global Navigation Satellite System (GNSS)) like the Global Positioning System (GPS), the Global Navigation Satellite System (GLONASS), Galileo, or Beidou or some other local or regional SPS such as the Indian Regional Navigational Satellite System (IRNSS), the European Geostationary Navigation Overlay Service (EGNOS), or the Wide Area Augmentation System (WAAS). Additional components of the communication system 100 are described below. The communication system 100 may include additional or alternative components.

As shown in FIG. 1, the NG-RAN 135 includes NR nodeBs (gNBs) 110a, 110b, and a next generation eNodeB (ng-eNB) 114, and the 5GC 140 includes an Access and Mobility Management Function (AMF) 115, a Session Management Function (SMF) 117, a Location Management Function (LMF) 120, and a Gateway Mobile Location Center (GMLC) 125. The gNBs 110a, 110b and the ng-eNB 114 are communicatively coupled to each other, are each configured to bi-directionally wirelessly communicate with the UE 105, and are each communicatively coupled to, and configured to bi-directionally communicate with, the AMF 115. The gNBs 110a, 110b, and the ng-eNB 114 may be referred to as base stations (BSs). The AMF 115, the SMF 117, the LMF 120, and the GMLC 125 are communicatively coupled to each other, and the GMLC is communicatively coupled to an external client 130. The SMF 117 may serve as an initial contact point of a Service Control Function (SCF) (not shown) to create, control, and delete media sessions. Base stations such as the gNBs 110a, 110b, and/or the ng-eNB 114 may be a macro cell (e.g., a high-power cellular base station), or a small cell (e.g., a low-power cellular base station), or an access point (e.g., a short-range base station configured to communicate with short-range technology such as WiFi, WiFi-Direct (WiFi-D), Bluetooth^{®}, Bluetooth^{®}-low energy (BLE), Zigbee, etc. One or more of the base stations, e.g., one or more of the gNBs 110a, 110b, and/or the ng-eNB 114 may be configured to communicate with the UE 105 via multiple carriers. Each of the gNBs 110a, 110b, and/or the ng-eNB 114 may provide communication coverage for a respective geographic region, e.g. a cell. Each cell may be partitioned into multiple sectors as a function of the base station antennas.

FIG. 1 provides a generalized illustration of various components, any or all of which may be utilized as appropriate, and each of which may be duplicated or omitted as necessary. Specifically, although only one UE 105 is illustrated, many UEs (e.g., hundreds, thousands, millions, etc.) may be utilized in the communication system 100. Similarly, the communication system 100 may include a larger (or smaller) number of SVs (i.e., more or fewer than the four SVs 190-193 shown), gNBs 110a, 110b, ng-eNBs 114, AMFs 115, external clients 130, and/or other components. The illustrated connections that connect the various components in the communication system 100 include data and signaling connections which may include additional (intermediary) components, direct or indirect physical and/or wireless connections, and/or additional networks. Furthermore, components may be rearranged, combined, separated, substituted, and/or omitted, depending on desired functionality.

While FIG. 1 illustrates a 5G-based network, similar network implementations and configurations may be used for other communication technologies, such as 3G, Long Term Evolution (LTE), etc. Implementations described herein (be they for 5G technology and/or for one or more other communication technologies and/or protocols) may be used to transmit (or broadcast) directional synchronization signals, receive and measure directional signals at UEs (e.g., the UE 105) and/or provide location assistance to the UE 105 (via the GMLC 125 or other location server) and/or compute a location for the UE 105 at a location-capable device such as the UE 105, the gNB 110a, 110b, or the LMF 120 based on measurement quantities received at the UE 105 for such directionally-transmitted signals. The gateway mobile location center (GMLC) 125, the location management function (LMF) 120, the access and mobility management function (AMF) 115, the SMF 117, the ng-eNB (eNodeB) 114 and the gNBs (gNodeBs) 110a, 110b are examples and may, in various embodiments, be replaced by or include various other location server functionality and/or base station functionality respectively.

The system 100 is capable of wireless communication in that components of the system 100 can communicate with one another (at least some times using wireless connections) directly or indirectly, e.g., via the gNBs 110a, 110b, the ng-eNB 114, and/or the 5GC 140 (and/or one or more other devices not shown, such as one or more other base transceiver stations). For indirect communications, the communications may be altered during transmission from one entity to another, e.g., to alter header information of data packets, to change format, etc. The UE 105 may include multiple UEs and may be a mobile wireless communication device, but may communicate wirelessly and via wired connections. The UE 105 may be any of a variety of devices, e.g., a smartphone, a tablet computer, a vehicle-based device, etc., but these are examples as the UE 105 is not required to be any of these configurations, and other configurations of UEs may be used. Other UEs may include wearable devices (e.g., smart watches, smart jewelry, smart glasses or headsets, etc.). Still other UEs may be used, whether currently existing or developed in the future. Further, other wireless devices (whether mobile or not) may be implemented within the system 100 and may communicate with each other and/or with the UE 105, the gNBs 110a, 110b, the ng-eNB 114, the 5GC 140, and/or the external client 130. For example, such other devices may include internet of thing (IoT) devices, medical devices, home entertainment and/or automation devices, etc. The 5GC 140 may communicate with the external client 130 (e.g., a computer system), e.g., to allow the external client 130 to request and/or receive location information regarding the UE 105 (e.g., via the GMLC 125).

The UE 105 or other devices may be configured to communicate in various networks and/or for various purposes and/or using various technologies (e.g., 5G, Wi-Fi communication, multiple frequencies of Wi-Fi communication, satellite positioning, one or more types of communications (e.g., GSM (Global System for Mobiles), CDMA (Code Division Multiple Access), LTE (Long Term Evolution), V2X (Vehicle-to-Everything, e.g., V2P (Vehicle-to-Pedestrian), V2I (Vehicle-to-Infrastructure), V2V (Vehicle-to-Vehicle), etc.), IEEE 802.11p, etc.). V2X communications may be cellular (Cellular-V2X (C-V2X)) and/or WiFi (e.g., DSRC (Dedicated Short-Range Connection)). The system 100 may support operation on multiple carriers (waveform signals of different frequencies). Multi-carrier transmitters can transmit modulated signals simultaneously on the multiple carriers. Each modulated signal may be a Code Division Multiple Access (CDMA) signal, a Time Division Multiple Access (TDMA) signal, an Orthogonal Frequency Division Multiple Access (OFDMA) signal, a Single-Carrier Frequency Division Multiple Access (SC-FDMA) signal, etc. Each modulated signal may be sent on a different carrier and may carry pilot, overhead information, data, etc. The UEs 105, 106 may communicate with each other through UE-to-UE sidelink (SL) communications by transmitting over one or more sidelink channels such as a physical sidelink synchronization channel (PSSCH), a physical sidelink broadcast channel (PSBCH), or a physical sidelink control channel (PSCCH).

The UE 105 may comprise and/or may be referred to as a device, a mobile device, a wireless device, a mobile terminal, a terminal, a mobile station (MS), a Secure User Plane Location (SUPL) Enabled Terminal (SET), or by some other name. Moreover, the UE 105 may correspond to a cellphone, smartphone, laptop, tablet, PDA, consumer asset tracking device, navigation device, Internet of Things (IoT) device, asset tracker, health monitors, security systems, smart city sensors, smart meters, wearable trackers, or some other portable or moveable device. Typically, though not necessarily, the UE 105 may support wireless communication using one or more radio Access Technologies (RATs) such as Global System for Mobile communication (GSM), Code Division Multiple Access (CDMA), Wideband CDMA (WCDMA), LTE, High Rate Packet Data (HRPD), IEEE 802.11 WiFi (also referred to as Wi-Fi), Bluetooth^{®} (BT), Worldwide Interoperability for Microwave Access (WiMAX), 5G new radio (NR) (e.g., using the NG-RAN 135 and the 5GC 140), etc. The UE 105 may support wireless communication using a Wireless Local Area Network (WLAN) which may connect to other networks (e.g., the Internet) using a Digital Subscriber Line (DSL) or packet cable, for example. The use of one or more of these RATs may allow the UE 105 to communicate with the external client 130 (e.g., via elements of the 5GC 140 not shown in FIG. 1, or possibly via the GMLC 125) and/or allow the external client 130 to receive location information regarding the UE 105 (e.g., via the GMLC 125).

The UE 105 may include a single entity or may include multiple entities such as in a personal area network where a user may employ audio, video and/or data I/O (input/output) devices and/or body sensors and a separate wireline or wireless modem. An estimate of a location of the UE 105 may be referred to as a location, location estimate, location fix, fix, position, position estimate, or position fix, and may be geographic, thus providing location coordinates for the UE 105 (e.g., latitude and longitude) which may or may not include an altitude component (e.g., height above sea level, height above or depth below ground level, floor level, or basement level). Alternatively, a location of the UE 105 may be expressed as a civic location (e.g., as a postal address or the designation of some point or small area in a building such as a particular room or floor). A location of the UE 105 may be expressed as an area or volume (defined either geographically or in civic form) within which the UE 105 is expected to be located with some probability or confidence level (e.g., 67%, 95%, etc.). A location of the UE 105 may be expressed as a relative location comprising, for example, a distance and direction from a known location. The relative location may be expressed as relative coordinates (e.g., X, Y (and Z) coordinates) defined relative to some origin at a known location which may be defined, e.g., geographically, in civic terms, or by reference to a point, area, or volume, e.g., indicated on a map, floor plan, or building plan. In the description contained herein, the use of the term location may comprise any of these variants unless indicated otherwise. When computing the location of a UE, it is common to solve for local x, y, and possibly z coordinates and then, if desired, convert the local coordinates into absolute coordinates (e.g., for latitude, longitude, and altitude above or below mean sea level).

The UE 105 may be configured to communicate with other entities using one or more of a variety of technologies. The UE 105 may be configured to connect indirectly to one or more communication networks via one or more device-to-device (D2D) peer-to-peer (P2P) links. The D2D P2P links may be supported with any appropriate D2D radio access technology (RAT), such as LTE Direct (LTE-D), WiFi Direct (WiFi-D), Bluetooth^{®}, and so on. One or more of a group of UEs utilizing D2D communications may be within a geographic coverage area of a Transmission/Reception Point (TRP) such as one or more of the gNBs 110a, 110b, and/or the ng-eNB 114. Other UEs in such a group may be outside such geographic coverage areas, or may be otherwise unable to receive transmissions from a base station. Groups of UEs communicating via D2D communications may utilize a one-to-many (1:M) system in which each UE may transmit to other UEs in the group. A TRP may facilitate scheduling of resources for D2D communications. In other cases, D2D communications may be carried out between UEs without the involvement of a TRP. One or more of a group of UEs utilizing D2D communications may be within a geographic coverage area of a TRP. Other UEs in such a group may be outside such geographic coverage areas, or be otherwise unable to receive transmissions from a base station. Groups of UEs communicating via D2D communications may utilize a one-to-many (1:M) system in which each UE may transmit to other UEs in the group. A TRP may facilitate scheduling of resources for D2D communications. In other cases, D2D communications may be carried out between UEs without the involvement of a TRP.

Base stations (BSs) in the NG-RAN 135 shown in FIG. 1 include NR Node Bs, referred to as the gNBs 110a and 110b. Pairs of the gNBs 110a, 110b in the NG-RAN 135 may be connected to one another via one or more other gNBs. Access to the 5G network is provided to the UE 105 via wireless communication between the UE 105 and one or more of the gNBs 110a, 110b, which may provide wireless communications access to the 5GC 140 on behalf of the UE 105 using 5G. In FIG. 1, the serving gNB for the UE 105 is assumed to be the gNB 110a, although another gNB (e.g. the gNB 110b) may act as a serving gNB if the UE 105 moves to another location or may act as a secondary gNB to provide additional throughput and bandwidth to the UE 105.

Base stations (BSs) in the NG-RAN 135 shown in FIG. 1 may include the ng-eNB 114, also referred to as a next generation evolved Node B. The ng-eNB 114 may be connected to one or more of the gNBs 110a, 110b in the NG-RAN 135, possibly via one or more other gNBs and/or one or more other ng-eNBs. The ng-eNB 114 may provide LTE wireless access and/or evolved LTE (eLTE) wireless access to the UE 105. One or more of the gNBs 110a, 110b and/or the ng-eNB 114 may be configured to function as positioning-only beacons which may transmit signals to assist with determining the position of the UE 105 but may not receive signals from the UE 105 or from other UEs.

The gNBs 110a, 110b, and/or the ng-eNB 114 may each comprise one or more TRPs. For example, each sector within a cell of a BS may comprise a TRP, although multiple TRPs may share one or more components (e.g., share a processor but have separate antennas). The system 100 may include only macro TRPs or the system 100 may have TRPs of different types, e.g., macro, pico, and/or femto TRPs, etc. A macro TRP may cover a relatively large geographic area (e.g., several kilometers in radius) and may allow unrestricted access by terminals with service subscription. A pico TRP may cover a relatively small geographic area (e.g., a pico cell) and may allow unrestricted access by terminals with service subscription. A femto or home TRP may cover a relatively small geographic area (e.g., a femto cell) and may allow restricted access by terminals having association with the femto cell (e.g., terminals for users in a home).

As noted, while FIG. 1 depicts nodes configured to communicate according to 5G communication protocols, nodes configured to communicate according to other communication protocols, such as, for example, an LTE protocol or IEEE 802.11x protocol, may be used. For example, in an Evolved Packet System (EPS) providing LTE wireless access to the UE 105, a RAN may comprise an Evolved Universal Mobile Telecommunications System (UMTS) Terrestrial Radio Access Network (E-UTRAN) which may comprise base stations comprising evolved Node Bs (eNBs). A core network for EPS may comprise an Evolved Packet Core (EPC). An EPS may comprise an E-UTRAN plus EPC, where the E-UTRAN corresponds to the NG-RAN 135 and the EPC corresponds to the 5GC 140 in FIG. 1.

The gNBs 110a, 110b and the ng-eNB 114 may communicate with the AMF 115, which, for positioning functionality, communicates with the LMF 120. The AMF 115 may support mobility of the UE 105, including cell change and handover and may participate in supporting a signaling connection to the UE 105 and possibly data and voice bearers for the UE 105. The LMF 120 may communicate directly with the UE 105, e.g., through wireless communications, or directly with the gNBs 110a, 110b, and/or the ng-eNB 114. The LMF 120 may support positioning of the UE 105 when the UE 105 accesses the NG-RAN 135 and may support position procedures / methods such as Assisted GNSS (A-GNSS), Observed Time Difference of Arrival (OTDOA) (e.g., Downlink (DL) OTDOA or Uplink (UL) OTDOA), Round Trip Time (RTT), Multi-Cell RTT, Real Time Kinematic (RTK), Precise Point Positioning (PPP), Differential GNSS (DGNSS), Enhanced Cell ID (E-CID), angle of arrival (AOA), angle of departure (AOD), and/or other position methods. The LMF 120 may process location services requests for the UE 105, e.g., received from the AMF 115 or from the GMLC 125. The LMF 120 may be connected to the AMF 115 and/or to the GMLC 125. The LMF 120 may be referred to by other names such as a Location Manager (LM), Location Function (LF), commercial LMF (CLMF), or value added LMF (VLMF). A node / system that implements the LMF 120 may additionally or alternatively implement other types of location-support modules, such as an Enhanced Serving Mobile Location Center (E-SMLC) or a Secure User Plane Location (SUPL) Location Platform (SLP). At least part of the positioning functionality (including derivation of the location of the UE 105) may be performed at the UE 105 (e.g., using signal measurements obtained by the UE 105 for signals transmitted by wireless nodes such as the gNBs 110a, 110b and/or the ng-eNB 114, and/or assistance data provided to the UE 105, e.g. by the LMF 120). The AMF 115 may serve as a control node that processes signaling between the UE 105 and the 5GC 140, and may provide QoS (Quality of Service) flow and session management. The AMF 115 may support mobility of the UE 105 including cell change and handover and may participate in supporting signaling connection to the UE 105.

The GMLC 125 may support a location request for the UE 105 received from the external client 130 and may forward such a location request to the AMF 115 for forwarding by the AMF 115 to the LMF 120 or may forward the location request directly to the LMF 120. A location response from the LMF 120 (e.g., containing a location estimate for the UE 105) may be returned to the GMLC 125 either directly or via the AMF 115 and the GMLC 125 may then return the location response (e.g., containing the location estimate) to the external client 130. The GMLC 125 is shown connected to both the AMF 115 and LMF 120, though only one of these connections may be supported by the 5GC 140 in some implementations.

As further illustrated in FIG. 1, the LMF 120 may communicate with the gNBs 110a, 110b and/or the ng-eNB 114 using a New Radio Position Protocol A (which may be referred to as NPPa or NRPPa), which may be defined in 3GPP Technical Specification (TS) 38.455. NRPPa may be the same as, similar to, or an extension of the LTE Positioning Protocol A (LPPa) defined in 3GPP TS 36.455, with NRPPa messages being transferred between the gNB 110a (or the gNB 110b) and the LMF 120, and/or between the ng-eNB 114 and the LMF 120, via the AMF 115. As further illustrated in FIG. 1, the LMF 120 and the UE 105 may communicate using an LTE Positioning Protocol (LPP), which may be defined in 3GPP TS 36.355. The LMF 120 and the UE 105 may also or instead communicate using a New Radio Positioning Protocol (which may be referred to as NPP or NRPP), which may be the same as, similar to, or an extension of LPP. Here, LPP and/or NPP messages may be transferred between the UE 105 and the LMF 120 via the AMF 115 and the serving gNB 110a, 110b or the serving ng-eNB 114 for the UE 105. For example, LPP and/or NPP messages may be transferred between the LMF 120 and the AMF 115 using a 5G Location Services Application Protocol (LCS AP) and may be transferred between the AMF 115 and the UE 105 using a 5G Non-Access Stratum (NAS) protocol. The LPP and/or NPP protocol may be used to support positioning of the UE 105 using UE-assisted and/or UE-based position methods such as A-GNSS, RTK, OTDOA and/or E-CID. The NRPPa protocol may be used to support positioning of the UE 105 using network-based position methods such as E-CID (e.g., when used with measurements obtained by the gNB 110a, 110b or the ng-eNB 114) and/or may be used by the LMF 120 to obtain location related information from the gNBs 110a, 110b and/or the ng-eNB 114, such as parameters defining directional SS (Synchronization Signals) or PRS transmissions from the gNBs 110a, 110b, and/or the ng-eNB 114. The LMF 120 may be co-located or integrated with a gNB or a TRP, or may be disposed remote from the gNB and/or the TRP and configured to communicate directly or indirectly with the gNB and/or the TRP.

With a UE-assisted position method, the UE 105 may obtain location measurements and send the measurements to a location server (e.g., the LMF 120) for computation of a location estimate for the UE 105. For example, the location measurements may include one or more of a Received Signal Strength Indication (RSSI), Round Trip signal propagation Time (RTT), Reference Signal Time Difference (RSTD), Reference Signal Received Power (RSRP) and/or Reference Signal Received Quality (RSRQ) for the gNBs 110a, 110b, the ng-eNB 114, and/or a WLAN AP. The location measurements may also or instead include measurements of GNSS pseudorange, code phase, and/or carrier phase for the SVs 190-193.

With a UE-based position method, the UE 105 may obtain location measurements (e.g., which may be the same as or similar to location measurements for a UE-assisted position method) and may compute a location of the UE 105 (e.g., with the help of assistance data received from a location server such as the LMF 120 or broadcast by the gNBs 110a, 110b, the ng-eNB 114, or other base stations or APs).

With a network-based position method, one or more base stations (e.g., the gNBs 110a, 110b, and/or the ng-eNB 114) or APs may obtain location measurements (e.g., measurements of RSSI, RTT, RSRP, RSRQ or Time of Arrival (ToA) for signals transmitted by the UE 105) and/or may receive measurements obtained by the UE 105. The one or more base stations or APs may send the measurements to a location server (e.g., the LMF 120) for computation of a location estimate for the UE 105.

Information provided by the gNBs 110a, 110b, and/or the ng-eNB 114 to the LMF 120 using NRPPa may include timing and configuration information for directional SS or PRS transmissions and location coordinates. The LMF 120 may provide some or all of this information to the UE 105 as assistance data in an LPP and/or NPP message via the NG-RAN 135 and the 5GC 140.

An LPP or NPP message sent from the LMF 120 to the UE 105 may instruct the UE 105 to do any of a variety of things depending on desired functionality. For example, the LPP or NPP message could contain an instruction for the UE 105 to obtain measurements for GNSS (or A-GNSS), WLAN, E-CID, and/or OTDOA (or some other position method). In the case of E-CID, the LPP or NPP message may instruct the UE 105 to obtain one or more measurement quantities (e.g., beam ID, beam width, mean angle, RSRP, RSRQ measurements) of directional signals transmitted within particular cells supported by one or more of the gNBs 110a, 110b, and/or the ng-eNB 114 (or supported by some other type of base station such as an eNB or WiFi AP). The UE 105 may send the measurement quantities back to the LMF 120 in an LPP or NPP message (e.g., inside a 5G NAS message) via the serving gNB 110a (or the serving ng-eNB 114) and the AMF 115.

As noted, while the communication system 100 is described in relation to 5G technology, the communication system 100 may be implemented to support other communication technologies, such as GSM, WCDMA, LTE, etc., that are used for supporting and interacting with mobile devices such as the UE 105 (e.g., to implement voice, data, positioning, and other functionalities). In some such embodiments, the 5GC 140 may be configured to control different air interfaces. For example, the 5GC 140 may be connected to a WLAN using a Non-3GPP InterWorking Function (N3IWF, not shown FIG. 1) in the 5GC 140. For example, the WLAN may support IEEE 802.11 WiFi access for the UE 105 and may comprise one or more WiFi APs. Here, the N3IWF may connect to the WLAN and to other elements in the 5GC 140 such as the AMF 115. In some embodiments, both the NG-RAN 135 and the 5GC 140 may be replaced by one or more other RANs and one or more other core networks. For example, in an EPS, the NG-RAN 135 may be replaced by an E-UTRAN containing eNBs and the 5GC 140 may be replaced by an EPC containing a Mobility Management Entity (MME) in place of the AMF 115, an E-SMLC in place of the LMF 120, and a GMLC that may be similar to the GMLC 125. In such an EPS, the E-SMLC may use LPPa in place of NRPPa to send and receive location information to and from the eNBs in the E-UTRAN and may use LPP to support positioning of the UE 105. In these other embodiments, positioning of the UE 105 using directional PRSs may be supported in an analogous manner to that described herein for a 5G network with the difference that functions and procedures described herein for the gNBs 110a, 110b, the ng-eNB 114, the AMF 115, and the LMF 120 may, in some cases, apply instead to other network elements such eNBs, WiFi APs, an MME, and an E-SMLC.

As noted, in some embodiments, positioning functionality may be implemented, at least in part, using the directional SS or PRS beams, sent by base stations (such as the gNBs 110a, 110b, and/or the ng-eNB 114) that are within range of the UE whose position is to be determined (e.g., the UE 105 of FIG. 1). The UE may, in some instances, use the directional SS or PRS beams from a plurality of base stations (such as the gNBs 110a, 110b, the ng-eNB 114, etc.) to compute the UE's position.

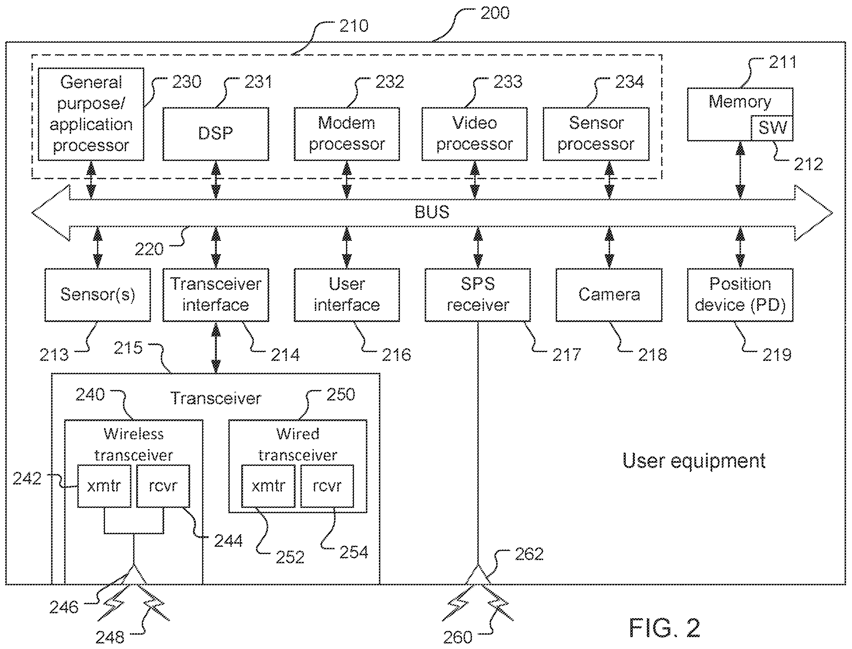

Referring also to FIG. 2, a UE 200 is an example of one of the UEs 105, 106 and comprises a computing platform including a processor 210, memory 211 including software (SW) 212, one or more sensors 213, a transceiver interface 214 for a transceiver 215 (that includes a wireless transceiver 240 and/or a wired transceiver 250), a user interface 216, a Satellite Positioning System (SPS) receiver 217, a camera 218, and a position device (PD) 219. The processor 210, the memory 211, the sensor(s) 213, the transceiver interface 214, the user interface 216, the SPS receiver 217, the camera 218, and the position device 219 may be communicatively coupled to each other by a bus 220 (which may be configured, e.g., for optical and/or electrical communication). One or more of the shown apparatus (e.g., the camera 218, the position device 219, and/or one or more of the sensor(s) 213, etc.) may be omitted from the UE 200. The processor 210 may include one or more intelligent hardware devices, e.g., a central processing unit (CPU), a microcontroller, an application specific integrated circuit (ASIC), etc. The processor 210 may comprise multiple processors including a general-purpose/application processor 230, a Digital Signal Processor (DSP) 231, a modem processor 232, a video processor 233, and/or a sensor processor 234. One or more of the processors 230-234 may comprise multiple devices (e.g., multiple processors). For example, the sensor processor 234 may comprise, e.g., processors for RF (radio frequency) sensing (with one or more (cellular) wireless signals transmitted and reflection(s) used to identify, map, and/or track an object), and/or ultrasound, etc. The modem processor 232 may support dual SIM/dual connectivity (or even more SIMs). For example, a SIM (Subscriber Identity Module or Subscriber Identification Module) may be used by an Original Equipment Manufacturer (OEM), and another SIM may be used by an end user of the UE 200 for connectivity. The memory 211 is a non-transitory storage medium that may include random access memory (RAM), flash memory, disc memory, and/or read-only memory (ROM), etc. The memory 211 stores the software 212 which may be processor-readable, processor-executable software code containing instructions that are configured to, when executed, cause the processor 210 to perform various functions described herein. Alternatively, the software 212 may not be directly executable by the processor 210 but may be configured to cause the processor 210, e.g., when compiled and executed, to perform the functions. The description may refer to the processor 210 performing a function, but this includes other implementations such as where the processor 210 executes software and/or firmware. The description may refer to the processor 210 performing a function as shorthand for one or more of the processors 230-234 performing the function. The description may refer to the UE 200 performing a function as shorthand for one or more appropriate components of the UE 200 performing the function. The processor 210 may include a memory with stored instructions in addition to and/or instead of the memory 211. Functionality of the processor 210 is discussed more fully below.

The configuration of the UE 200 shown in FIG. 2 is an example and not limiting of the disclosure, including the claims, and other configurations may be used. For example, an example configuration of the UE includes one or more of the processors 230-234 of the processor 210, the memory 211, and the wireless transceiver 240. Other example configurations include one or more of the processors 230-234 of the processor 210, the memory 211, the wireless transceiver 240, and one or more of the sensor(s) 213, the user interface 216, the SPS receiver 217, the camera 218, the PD 219, and/or the wired transceiver 250.

The UE 200 may comprise the modem processor 232 that may be capable of performing baseband processing of signals received and down-converted by the transceiver 215 and/or the SPS receiver 217. The modem processor 232 may perform baseband processing of signals to be upconverted for transmission by the transceiver 215. Also or alternatively, baseband processing may be performed by the general-purpose/application processor 230 and/or the DSP 231. Other configurations, however, may be used to perform baseband processing.

The UE 200 may include the sensor(s) 213 that may include, for example, one or more of various types of sensors such as one or more inertial sensors, one or more magnetometers, one or more environment sensors, one or more optical sensors, one or more weight sensors, and/or one or more radio frequency (RF) sensors, etc. An inertial measurement unit (IMU) may comprise, for example, one or more accelerometers (e.g., collectively responding to acceleration of the UE 200 in three dimensions) and/or one or more gyroscopes (e.g., three-dimensional gyroscope(s)). The sensor(s) 213 may include one or more magnetometers (e.g., three-dimensional magnetometer(s)) to determine orientation (e.g., relative to magnetic north and/or true north) that may be used for any of a variety of purposes, e.g., to support one or more compass applications. The environment sensor(s) may comprise, for example, one or more temperature sensors, one or more barometric pressure sensors, one or more ambient light sensors, one or more camera imagers, and/or one or more microphones, etc. The sensor(s) 213 may generate analog and/or digital signals indications of which may be stored in the memory 211 and processed by the DSP 231 and/or the general-purpose/application processor 230 in support of one or more applications such as, for example, applications directed to positioning and/or navigation operations.

The sensor(s) 213 may be used in relative location measurements, relative location determination, motion determination, etc. Information detected by the sensor(s) 213 may be used for motion detection, relative displacement, dead reckoning, sensor-based location determination, and/or sensor-assisted location determination. The sensor(s) 213 may be useful to determine whether the UE 200 is fixed (stationary) or mobile and/or whether to report certain useful information to the LMF 120 regarding the mobility of the UE 200. For example, based on the information obtained/measured by the sensor(s) 213, the UE 200 may notify/report to the LMF 120 that the UE 200 has detected movements or that the UE 200 has moved, and report the relative displacement/distance (e.g., via dead reckoning, or sensor-based location determination, or sensor-assisted location determination enabled by the sensor(s) 213). In another example, for relative positioning information, the sensors/IMU can be used to determine the angle and/or orientation of the other device with respect to the UE 200, etc.

The IMU may be configured to provide measurements about a direction of motion and/or a speed of motion of the UE 200, which may be used in relative location determination. For example, one or more accelerometers and/or one or more gyroscopes of the IMU may detect, respectively, a linear acceleration and a speed of rotation of the UE 200. The linear acceleration and speed of rotation measurements of the UE 200 may be integrated over time to determine an instantaneous direction of motion as well as a displacement of the UE 200. The instantaneous direction of motion and the displacement may be integrated to track a location of the UE 200. For example, a reference location of the UE 200 may be determined, e.g., using the SPS receiver 217 (and/or by some other means) for a moment in time and measurements from the accelerometer(s) and gyroscope(s) taken after this moment in time may be used in dead reckoning to determine present location of the UE 200 based on movement (direction and distance) of the UE 200 relative to the reference location.

The magnetometer(s) may determine magnetic field strengths in different directions which may be used to determine orientation of the UE 200. For example, the orientation may be used to provide a digital compass for the UE 200. The magnetometer(s) may include a two-dimensional magnetometer configured to detect and provide indications of magnetic field strength in two orthogonal dimensions. Alternatively, the magnetometer(s) may include a three-dimensional magnetometer configured to detect and provide indications of magnetic field strength in three orthogonal dimensions. The magnetometer(s) may provide means for sensing a magnetic field and providing indications of the magnetic field, e.g., to the processor 210.

The transceiver 215 may include a wireless transceiver 240 and a wired transceiver 250 configured to communicate with other devices through wireless connections and wired connections, respectively. For example, the wireless transceiver 240 may include a wireless transmitter 242 and a wireless receiver 244 coupled to an antenna 246 for transmitting (e.g., on one or more uplink channels and/or one or more sidelink channels) and/or receiving (e.g., on one or more downlink channels and/or one or more sidelink channels) wireless signals 248 and transducing signals from the wireless signals 248 to wired (e.g., electrical and/or optical) signals and from wired (e.g., electrical and/or optical) signals to the wireless signals 248. The wireless transmitter 242 includes appropriate components (e.g., a power amplifier and a digital-to-analog converter). The wireless receiver 244 includes appropriate components (e.g., one or more amplifiers, one or more frequency filters, and an analog-to-digital converter). The wireless transmitter 242 may include multiple transmitters that may be discrete components or combined/integrated components, and/or the wireless receiver 244 may include multiple receivers that may be discrete components or combined/integrated components. The wireless transceiver 240 may be configured to communicate signals (e.g., with TRPs and/or one or more other devices) according to a variety of radio access technologies (RATs) such as 5G New Radio (NR), GSM (Global System for Mobiles), UMTS (Universal Mobile Telecommunications System), AMPS (Advanced Mobile Phone System), CDMA (Code Division Multiple Access), WCDMA (Wideband CDMA), LTE (Long Term Evolution), LTE Direct (LTE-D), 3GPP LTE-V2X (PC5), IEEE 802.11 (including IEEE 802.11p), WiFi, WiFi Direct (WiFi-D), Bluetooth^{®}, Zigbee etc. New Radio may use mm-wave frequencies and/or sub-6GHz frequencies. The wired transceiver 250 may include a wired transmitter 252 and a wired receiver 254 configured for wired communication, e.g., a network interface that may be utilized to communicate with the NG-RAN 135 to send communications to, and receive communications from, the NG-RAN 135. The wired transmitter 252 may include multiple transmitters that may be discrete components or combined/integrated components, and/or the wired receiver 254 may include multiple receivers that may be discrete components or combined/integrated components. The wired transceiver 250 may be configured, e.g., for optical communication and/or electrical communication. The transceiver 215 may be communicatively coupled to the transceiver interface 214, e.g., by optical and/or electrical connection. The transceiver interface 214 may be at least partially integrated with the transceiver 215. The wireless transmitter 242, the wireless receiver 244, and/or the antenna 246 may include multiple transmitters, multiple receivers, and/or multiple antennas, respectively, for sending and/or receiving, respectively, appropriate signals.

The user interface 216 may comprise one or more of several devices such as, for example, a speaker, microphone, display device, vibration device, keyboard, touch screen, etc. The user interface 216 may include more than one of any of these devices. The user interface 216 may be configured to enable a user to interact with one or more applications hosted by the UE 200. For example, the user interface 216 may store indications of analog and/or digital signals in the memory 211 to be processed by DSP 231 and/or the general-purpose/application processor 230 in response to action from a user. Similarly, applications hosted on the UE 200 may store indications of analog and/or digital signals in the memory 211 to present an output signal to a user. The user interface 216 may include an audio input/output (I/O) device comprising, for example, a speaker, a microphone, digital-to-analog circuitry, analog-to-digital circuitry, an amplifier and/or gain control circuitry (including more than one of any of these devices). Other configurations of an audio I/O device may be used. Also or alternatively, the user interface 216 may comprise one or more touch sensors responsive to touching and/or pressure, e.g., on a keyboard and/or touch screen of the user interface 216.

The SPS receiver 217 (e.g., a Global Positioning System (GPS) receiver) may be capable of receiving and acquiring SPS signals 260 via an SPS antenna 262. The SPS antenna 262 is configured to transduce the SPS signals 260 from wireless signals to wired signals, e.g., electrical or optical signals, and may be integrated with the antenna 246. The SPS receiver 217 may be configured to process, in whole or in part, the acquired SPS signals 260 for estimating a location of the UE 200. For example, the SPS receiver 217 may be configured to determine location of the UE 200 by trilateration using the SPS signals 260. The general-purpose/application processor 230, the memory 211, the DSP 231 and/or one or more specialized processors (not shown) may be utilized to process acquired SPS signals, in whole or in part, and/or to calculate an estimated location of the UE 200, in conjunction with the SPS receiver 217. The memory 211 may store indications (e.g., measurements) of the SPS signals 260 and/or other signals (e.g., signals acquired from the wireless transceiver 240) for use in performing positioning operations. The general-purpose/application processor 230, the DSP 231, and/or one or more specialized processors, and/or the memory 211 may provide or support a location engine for use in processing measurements to estimate a location of the UE 200.

The UE 200 may include the camera 218 for capturing still or moving imagery. The camera 218 may comprise, for example, an imaging sensor (e.g., a charge coupled device or a CMOS (Complementary Metal-Oxide Semiconductor) imager), a lens, analog-to-digital circuitry, frame buffers, etc. Additional processing, conditioning, encoding, and/or compression of signals representing captured images may be performed by the general-purpose/application processor 230 and/or the DSP 231. Also or alternatively, the video processor 233 may perform conditioning, encoding, compression, and/or manipulation of signals representing captured images. The video processor 233 may decode/decompress stored image data for presentation on a display device (not shown), e.g., of the user interface 216.

The position device (PD) 219 may be configured to determine a position of the UE 200, motion of the UE 200, and/or relative position of the UE 200, and/or time. For example, the PD 219 may communicate with, and/or include some or all of, the SPS receiver 217. The PD 219 may work in conjunction with the processor 210 and the memory 211 as appropriate to perform at least a portion of one or more positioning methods, although the description herein may refer to the PD 219 being configured to perform, or performing, in accordance with the positioning method(s). The PD 219 may also or alternatively be configured to determine location of the UE 200 using terrestrial-based signals (e.g., at least some of the wireless signals 248) for trilateration, for assistance with obtaining and using the SPS signals 260, or both. The PD 219 may be configured to determine location of the UE 200 based on a cell of a serving base station (e.g., a cell center) and/or another technique such as E-CID. The PD 219 may be configured to use one or more images from the camera 218 and image recognition combined with known locations of landmarks (e.g., natural landmarks such as mountains and/or artificial landmarks such as buildings, bridges, streets, etc.) to determine location of the UE 200. The PD 219 may be configured to use one or more other techniques (e.g., relying on the UE's self-reported location (e.g., part of the UE's position beacon)) for determining the location of the UE 200, and may use a combination of techniques (e.g., SPS and terrestrial positioning signals) to determine the location of the UE 200. The PD 219 may include one or more of the sensors 213 (e.g., gyroscope(s), accelerometer(s), magnetometer(s), etc.) that may sense orientation and/or motion of the UE 200 and provide indications thereof that the processor 210 (e.g., the general-purpose/application processor 230 and/or the DSP 231) may be configured to use to determine motion (e.g., a velocity vector and/or an acceleration vector) of the UE 200. The PD 219 may be configured to provide indications of uncertainty and/or error in the determined position and/or motion. Functionality of the PD 219 may be provided in a variety of manners and/or configurations, e.g., by the general-purpose/application processor 230, the transceiver 215, the SPS receiver 217, and/or another component of the UE 200, and may be provided by hardware, software, firmware, or various combinations thereof.

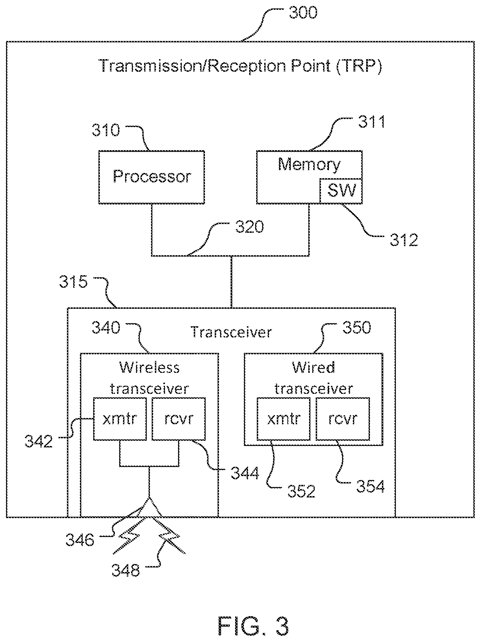

Referring also to FIG. 3, an example of a TRP 300 of the gNBs 110a, 110b, and/or the ng-eNB 114 comprises a computing platform including a processor 310, memory 311 including software (SW) 312, and a transceiver 315. The processor 310, the memory 311, and the transceiver 315 may be communicatively coupled to each other by a bus 320 (which may be configured, e.g., for optical and/or electrical communication). One or more of the shown apparatus (e.g., a wireless transceiver) may be omitted from the TRP 300. The processor 310 may include one or more intelligent hardware devices, e.g., a central processing unit (CPU), a microcontroller, an application specific integrated circuit (ASIC), etc. The processor 310 may comprise multiple processors (e.g., including a general-purpose/ application processor, a DSP, a modem processor, a video processor, and/or a sensor processor as shown in FIG. 2). The memory 311 is a non-transitory storage medium that may include random access memory (RAM)), flash memory, disc memory, and/or read-only memory (ROM), etc. The memory 311 stores the software 312 which may be processor-readable, processor-executable software code containing instructions that are configured to, when executed, cause the processor 310 to perform various functions described herein. Alternatively, the software 312 may not be directly executable by the processor 310 but may be configured to cause the processor 310, e.g., when compiled and executed, to perform the functions. The description may refer to the processor 310 performing a function, but this includes other implementations such as where the processor 310 executes software and/or firmware. The description may refer to the processor 310 performing a function as shorthand for one or more of the processors contained in the processor 310 performing the function. The description may refer to the TRP 300 performing a function as shorthand for one or more appropriate components (e.g., the processor 310 and the memory 311) of the TRP 300 (and thus of one of the gNBs 110a, 110b, and/or the ng-eNB 114) performing the function. The processor 310 may include a memory with stored instructions in addition to and/or instead of the memory 311. Functionality of the processor 310 is discussed more fully below.

The transceiver 315 may include a wireless transceiver 340 and/or a wired transceiver 350 configured to communicate with other devices through wireless connections and wired connections, respectively. For example, the wireless transceiver 340 may include a wireless transmitter 342 and a wireless receiver 344 coupled to one or more antennas 346 for transmitting (e.g., on one or more uplink channels and/or one or more downlink channels) and/or receiving (e.g., on one or more downlink channels and/or one or more uplink channels) wireless signals 348 and transducing signals from the wireless signals 348 to wired (e.g., electrical and/or optical) signals and from wired (e.g., electrical and/or optical) signals to the wireless signals 348. Thus, the wireless transmitter 342 may include multiple transmitters that may be discrete components or combined/integrated components, and/or the wireless receiver 344 may include multiple receivers that may be discrete components or combined/integrated components. The wireless transceiver 340 may be configured to communicate signals (e.g., with the UE 200, one or more other UEs, and/or one or more other devices) according to a variety of radio access technologies (RATs) such as 5G New Radio (NR), GSM (Global System for Mobiles), UMTS (Universal Mobile Telecommunications System), AMPS (Advanced Mobile Phone System), CDMA (Code Division Multiple Access), WCDMA (Wideband CDMA), LTE (Long Term Evolution), LTE Direct (LTE-D), 3GPP LTE-V2X (PC5), IEEE 802.11 (including IEEE 802.11p), WiFi, WiFi Direct (WiFi-D), Bluetooth^{®}, Zigbee etc. The wired transceiver 350 may include a wired transmitter 352 and a wired receiver 354 configured for wired communication, e.g., a network interface that may be utilized to communicate with the NG-RAN 135 to send communications to, and receive communications from, the LMF 120, for example, and/or one or more other network entities. The wired transmitter 352 may include multiple transmitters that may be discrete components or combined/integrated components, and/or the wired receiver 354 may include multiple receivers that may be discrete components or combined/integrated components. The wired transceiver 350 may be configured, e.g., for optical communication and/or electrical communication.

The configuration of the TRP 300 shown in FIG. 3 is an example and not limiting of the disclosure, including the claims, and other configurations may be used. For example, the description herein discusses that the TRP 300 is configured to perform or performs several functions, but one or more of these functions may be performed by the LMF 120 and/or the UE 200 (i.e., the LMF 120 and/or the UE 200 may be configured to perform one or more of these functions).

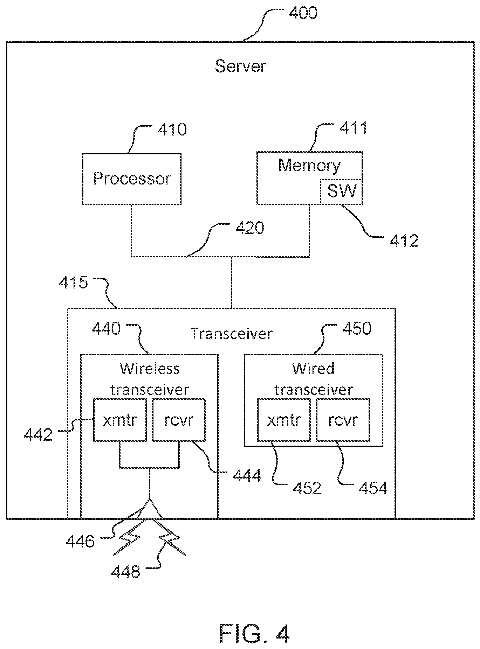

Referring also to FIG. 4, a server 400, of which the LMF 120 is an example, comprises a computing platform including a processor 410, memory 411 including software (SW) 412, and a transceiver 415. The processor 410, the memory 411, and the transceiver 415 may be communicatively coupled to each other by a bus 420 (which may be configured, e.g., for optical and/or electrical communication). One or more of the shown apparatus (e.g., a wireless transceiver) may be omitted from the server 400. The processor 410 may include one or more intelligent hardware devices, e.g., a central processing unit (CPU), a microcontroller, an application specific integrated circuit (ASIC), etc. The processor 410 may comprise multiple processors (e.g., including a general-purpose/ application processor, a DSP, a modem processor, a video processor, and/or a sensor processor as shown in FIG. 2). The memory 411 is a non-transitory storage medium that may include random access memory (RAM)), flash memory, disc memory, and/or read-only memory (ROM), etc. The memory 411 stores the software 412 which may be processor-readable, processor-executable software code containing instructions that are configured to, when executed, cause the processor 410 to perform various functions described herein. Alternatively, the software 412 may not be directly executable by the processor 410 but may be configured to cause the processor 410, e.g., when compiled and executed, to perform the functions. The description may refer to the processor 410 performing a function, but this includes other implementations such as where the processor 410 executes software and/or firmware. The description may refer to the processor 410 performing a function as shorthand for one or more of the processors contained in the processor 410 performing the function. The description may refer to the server 400 performing a function as shorthand for one or more appropriate components of the server 400 performing the function. The processor 410 may include a memory with stored instructions in addition to and/or instead of the memory 411. Functionality of the processor 410 is discussed more fully below.

The transceiver 415 may include a wireless transceiver 440 and/or a wired transceiver 450 configured to communicate with other devices through wireless connections and wired connections, respectively. For example, the wireless transceiver 440 may include a wireless transmitter 442 and a wireless receiver 444 coupled to one or more antennas 446 for transmitting (e.g., on one or more downlink channels) and/or receiving (e.g., on one or more uplink channels) wireless signals 448 and transducing signals from the wireless signals 448 to wired (e.g., electrical and/or optical) signals and from wired (e.g., electrical and/or optical) signals to the wireless signals 448. Thus, the wireless transmitter 442 may include multiple transmitters that may be discrete components or combined/integrated components, and/or the wireless receiver 444 may include multiple receivers that may be discrete components or combined/integrated components. The wireless transceiver 440 may be configured to communicate signals (e.g., with the UE 200, one or more other UEs, and/or one or more other devices) according to a variety of radio access technologies (RATs) such as 5G New Radio (NR), GSM (Global System for Mobiles), UMTS (Universal Mobile Telecommunications System), AMPS (Advanced Mobile Phone System), CDMA (Code Division Multiple Access), WCDMA (Wideband CDMA), LTE (Long Term Evolution), LTE Direct (LTE-D), 3GPP LTE-V2X (PC5), IEEE 802.11 (including IEEE 802.11p), WiFi, WiFi Direct (WiFi-D), Bluetooth^{®}, Zigbee etc. The wired transceiver 450 may include a wired transmitter 452 and a wired receiver 454 configured for wired communication, e.g., a network interface that may be utilized to communicate with the NG-RAN 135 to send communications to, and receive communications from, the TRP 300, for example, and/or one or more other entities. The wired transmitter 452 may include multiple transmitters that may be discrete components or combined/integrated components, and/or the wired receiver 454 may include multiple receivers that may be discrete components or combined/integrated components. The wired transceiver 450 may be configured, e.g., for optical communication and/or electrical communication.

The description herein may refer to the processor 410 performing a function, but this includes other implementations such as where the processor 410 executes software (stored in the memory 411) and/or firmware. The description herein may refer to the server 400 performing a function as shorthand for one or more appropriate components (e.g., the processor 410 and the memory 411) of the server 400 performing the function.

The configuration of the server 400 shown in FIG. 4 is an example and not limiting of the disclosure, including the claims, and other configurations may be used. For example, the wireless transceiver 440 may be omitted. Also or alternatively, the description herein discusses that the server 400 is configured to perform or performs several functions, but one or more of these functions may be performed by the TRP 300 and/or the UE 200 (i.e., the TRP 300 and/or the UE 200 may be configured to perform one or more of these functions).

### Positioning Techniques

For terrestrial positioning of a UE in cellular networks, techniques such as Advanced Forward Link Trilateration (AFLT) and Observed Time Difference Of Arrival (OTDOA) often operate in "UE-assisted" mode in which measurements of reference signals (e.g., PRS, CRS, etc.) transmitted by base stations are taken by the UE and then provided to a location server. The location server then calculates the position of the UE based on the measurements and known locations of the base stations. Because these techniques use the location server to calculate the position of the UE, rather than the UE itself, these positioning techniques are not frequently used in applications such as car or cell-phone navigation, which instead typically rely on satellite-based positioning.

A UE may use a Satellite Positioning System (SPS) (a Global Navigation Satellite System (GNSS)) for high-accuracy positioning using precise point positioning (PPP) or real time kinematic (RTK) technology. These technologies use assistance data such as measurements from ground-based stations. LTE Release 15 allows the data to be encrypted so that only the UEs subscribed to the service can read the information. Such assistance data varies with time. Thus, a UE subscribed to the service may not easily "break encryption" for other UEs by passing on the data to other UEs that have not paid for the subscription. The passing on would need to be repeated every time the assistance data changes.

In UE-assisted positioning, the UE sends measurements (e.g., TDOA, Angle of Arrival (AoA), etc.) to the positioning server (e.g., LMF/eSMLC). The positioning server has the base station almanac (BSA) that contains multiple 'entries' or 'records', one record per cell, where each record contains geographical cell location but also may include other data. An identifier of the 'record' among the multiple 'records' in the BSA may be referenced. The BSA and the measurements from the UE may be used to compute the position of the UE.

In conventional UE-based positioning, a UE computes its own position, thus avoiding sending measurements to the network (e.g., location server), which in turn improves latency and scalability. The UE uses relevant BSA record information (e.g., locations of gNBs (more broadly base stations)) from the network. The BSA information may be encrypted. But since the BSA information varies much less often than, for example, the PPP or RTK assistance data described earlier, it may be easier to make the BSA information (compared to the PPP or RTK information) available to UEs that did not subscribe and pay for decryption keys. Transmissions of reference signals by the gNBs make BSA information potentially accessible to crowd-sourcing or war-driving, essentially enabling BSA information to be generated based on in-the-field and/or over-the-top observations.

Positioning techniques may be characterized and/or assessed based on one or more criteria such as position determination accuracy and/or latency. Latency is a time elapsed between an event that triggers determination of position-related data and the availability of that data at a positioning system interface, e.g., an interface of the LMF 120. At initialization of a positioning system, the latency for the availability of position-related data is called time to first fix (TTFF), and is larger than latencies after the TTFF. An inverse of a time elapsed between two consecutive position-related data availabilities is called an update rate, i.e., the rate at which position-related data are generated after the first fix. Latency may depend on processing capability, e.g., of the UE. For example, a UE may report a processing capability of the UE as a duration of DL PRS symbols in units of time (e.g., milliseconds) that the UE can process every T amount of time (e.g., T ms) assuming 272 PRB (Physical Resource Block) allocation. Other examples of capabilities that may affect latency are a number of TRPs from which the UE can process PRS, a number of PRS that the UE can process, and a bandwidth of the UE.

One or more of many different positioning techniques (also called positioning methods) may be used to determine position of an entity such as one of the UEs 105, 106. For example, known position-determination techniques include RTT, multi-RTT, OTDOA (also called TDOA and including UL-TDOA and DL-TDOA), Enhanced Cell Identification (E-CID), DL-AoD, UL-AoA, etc. RTT uses a time for a signal to travel from one entity to another and back to determine a range between the two entities. The range, plus a known location of a first one of the entities and an angle between the two entities (e.g., an azimuth angle) can be used to determine a location of the second of the entities. In multi-RTT (also called multi-cell RTT), multiple ranges from one entity (e.g., a UE) to other entities (e.g., TRPs) and known locations of the other entities may be used to determine the location of the one entity. In TDOA techniques, the difference in travel times between one entity and other entities may be used to determine relative ranges from the other entities and those, combined with known locations of the other entities may be used to determine the location of the one entity. Angles of arrival and/or departure may be used to help determine location of an entity. For example, an angle of arrival or an angle of departure of a signal combined with a range between devices (determined using signal, e.g., a travel time of the signal, a received power of the signal, etc.) and a known location of one of the devices may be used to determine a location of the other device. The angle of arrival or departure may be an azimuth angle relative to a reference direction such as true north. The angle of arrival or departure may be a zenith angle relative to directly upward from an entity (i.e., relative to radially outward from a center of Earth). E-CID uses the identity of a serving cell, the timing advance (i.e., the difference between receive and transmit times at the UE), estimated timing and power of detected neighbor cell signals, and possibly angle of arrival (e.g., of a signal at the UE from the base station or vice versa) to determine location of the UE. In TDOA, the difference in arrival times at a receiving device of signals from different sources along with known locations of the sources and known offset of transmission times from the sources are used to determine the location of the receiving device.

In a network-centric RTT estimation, the serving base station instructs the UE to scan for / receive RTT measurement signals (e.g., PRS) on serving cells of two or more neighboring base stations (and typically the serving base station, as at least three base stations are needed). The one of more base stations transmit RTT measurement signals on low reuse resources (e.g., resources used by the base station to transmit system information) allocated by the network (e.g., a location server such as the LMF 120). The UE records the arrival time (also referred to as a receive time, a reception time, a time of reception, or a time of arrival (ToA)) of each RTT measurement signal relative to the UE's current downlink timing (e.g., as derived by the UE from a DL signal received from its serving base station), and transmits a common or individual RTT response message (e.g., SRS (sounding reference signal) for positioning, i.e., UL-PRS) to the one or more base stations (e.g., when instructed by its serving base station) and may include the time difference *T*_{*Rx*→*Tx*} (i.e., UE T_{Rx-Tx} or UE_{Rx-Tx}) between the ToA of the RTT measurement signal and the transmission time of the RTT response message in a payload of each RTT response message. The RTT response message would include a reference signal from which the base station can deduce the ToA of the RTT response. By comparing the difference *T*_{*Tx*→*Rx*} between the transmission time of the RTT measurement signal from the base station and the ToA of the RTT response at the base station to the UE-reported time difference *T*_{*Rx*→}*_{Tx},* the base station can deduce the propagation time between the base station and the UE, from which the base station can determine the distance between the UE and the base station by assuming the speed of light during this propagation time.

A UE-centric RTT estimation is similar to the network-based method, except that the UE transmits uplink RTT measurement signal(s) (e.g., when instructed by a serving base station), which are received by multiple base stations in the neighborhood of the UE. Each involved base station responds with a downlink RTT response message, which may include the time difference between the ToA of the RTT measurement signal at the base station and the transmission time of the RTT response message from the base station in the RTT response message payload.

For both network-centric and UE-centric procedures, the side (network or UE) that performs the RTT calculation typically (though not always) transmits the first message(s) or signal(s) (e.g., RTT measurement signal(s)), while the other side responds with one or more RTT response message(s) or signal(s) that may include the difference between the ToA of the first message(s) or signal(s) and the transmission time of the RTT response message(s) or signal(s).

A multi-RTT technique may be used to determine position. For example, a first entity (e.g., a UE) may send out one or more signals (e.g., unicast, multicast, or broadcast from the base station) and multiple second entities (e.g., other TSPs such as base station(s) and/or UE(s)) may receive a signal from the first entity and respond to this received signal. The first entity receives the responses from the multiple second entities. The first entity (or another entity such as an LMF) may use the responses from the second entities to determine ranges to the second entities and may use the multiple ranges and known locations of the second entities to determine the location of the first entity by trilateration.

In some instances, additional information may be obtained in the form of an angle of arrival (AoA) or angle of departure (AoD) that defines a straight-line direction (e.g., which may be in a horizontal plane or in three dimensions) or possibly a range of directions (e.g., for the UE from the locations of base stations). The intersection of two directions can provide another estimate of the location for the UE.

For positioning techniques using PRS (Positioning Reference Signal) signals (e.g., TDOA and RTT), PRS signals sent by multiple TRPs are measured and the arrival times of the signals, known transmission times, and known locations of the TRPs used to determine ranges from a UE to the TRPs. For example, an RSTD (Reference Signal Time Difference) may be determined for PRS signals received from multiple TRPs and used in a TDOA technique to determine position (location) of the UE. A positioning reference signal may be referred to as a PRS or a PRS signal. The PRS signals are typically sent using the same power and PRS signals with the same signal characteristics (e.g., same frequency shift) may interfere with each other such that a PRS signal from a more distant TRP may be overwhelmed by a PRS signal from a closer TRP such that the signal from the more distant TRP may not be detected. PRS muting may be used to help reduce interference by muting some PRS signals (reducing the power of the PRS signal, e.g., to zero and thus not transmitting the PRS signal). In this way, a weaker (at the UE) PRS signal may be more easily detected by the UE without a stronger PRS signal interfering with the weaker PRS signal. The term RS, and variations thereof (e.g., PRS, SRS, CSI-RS (Channel State Information - Reference Signal)), may refer to one reference signal or more than one reference signal.

Positioning reference signals (PRS) include downlink PRS (DL PRS, often referred to simply as PRS) and uplink PRS (UL PRS) (which may be called SRS (Sounding Reference Signal) for positioning). A PRS may comprise a PN code (pseudorandom number code) or be generated using a PN code (e.g., by modulating a carrier signal with the PN code) such that a source of the PRS may serve as a pseudo-satellite (a pseudolite). The PN code may be unique to the PRS source (at least within a specified area such that identical PRS from different PRS sources do not overlap). PRS may comprise PRS resources and/or PRS resource sets of a frequency layer. A DL PRS positioning frequency layer (or simply a frequency layer) is a collection of DL PRS resource sets, from one or more TRPs, with PRS resource(s) that have common parameters configured by higher-layer parameters *DL-PRS-PositioningFrequencyLayer, DL-PRS-ResourceSet,* and *DL-PRS-Resource.* Each frequency layer has a DL PRS subcarrier spacing (SCS) for the DL PRS resource sets and the DL PRS resources in the frequency layer. Each frequency layer has a DL PRS cyclic prefix (CP) for the DL PRS resource sets and the DL PRS resources in the frequency layer. In 5G, a resource block occupies 12 consecutive subcarriers and a specified number of symbols. Common resource blocks are the set of resource blocks that occupy a channel bandwidth. A bandwidth part (BWP) is a set of contiguous common resource blocks and may include all the common resource blocks within a channel bandwidth or a subset of the common resource blocks. Also, a DL PRS Point A parameter defines a frequency of a reference resource block (and the lowest subcarrier of the resource block), with DL PRS resources belonging to the same DL PRS resource set having the same Point A and all DL PRS resource sets belonging to the same frequency layer having the same Point A. A frequency layer also has the same DL PRS bandwidth, the same start PRB (and center frequency), and the same value of comb size (i.e., a frequency of PRS resource elements per symbol such that for comb-N, every N^{th} resource element is a PRS resource element). A PRS resource set is identified by a PRS resource set ID and may be associated with a particular TRP (identified by a cell ID) transmitted by an antenna panel of a base station. A PRS resource ID in a PRS resource set may be associated with an omnidirectional signal, and/or with a single beam (and/or beam ID) transmitted from a single base station (where a base station may transmit one or more beams). Each PRS resource of a PRS resource set may be transmitted on a different beam and as such, a PRS resource, or simply resource can also be referred to as a beam. This does not have any implications on whether the base stations and the beams on which PRS are transmitted are known to the UE.

A TRP may be configured, e.g., by instructions received from a server and/or by software in the TRP, to send DL PRS per a schedule. According to the schedule, the TRP may send the DL PRS intermittently, e.g., periodically at a consistent interval from an initial transmission. The TRP may be configured to send one or more PRS resource sets. A resource set is a collection of PRS resources across one TRP, with the resources having the same periodicity, a common muting pattern configuration (if any), and the same repetition factor across slots. Each of the PRS resource sets comprises multiple PRS resources, with each PRS resource comprising multiple OFDM (Orthogonal Frequency Division Multiplexing) Resource Elements (REs) that may be in multiple Resource Blocks (RBs) within N (one or more) consecutive symbol(s) within a slot. PRS resources (or reference signal (RS) resources generally) may be referred to as OFDM PRS resources (or OFDM RS resources). An RB is a collection of REs spanning a quantity of one or more consecutive symbols in the time domain and a quantity (12 for a 5G RB) of consecutive sub-carriers in the frequency domain. Each PRS resource is configured with an RE offset, slot offset, a symbol offset within a slot, and a number of consecutive symbols that the PRS resource may occupy within a slot. The RE offset defines the starting RE offset of the first symbol within a DL PRS resource in frequency. The relative RE offsets of the remaining symbols within a DL PRS resource are defined based on the initial offset. The slot offset is the starting slot of the DL PRS resource with respect to a corresponding resource set slot offset. The symbol offset determines the starting symbol of the DL PRS resource within the starting slot. Transmitted REs may repeat across slots, with each transmission being called a repetition such that there may be multiple repetitions in a PRS resource. The DL PRS resources in a DL PRS resource set are associated with the same TRP and each DL PRS resource has a DL PRS resource ID. A DL PRS resource ID in a DL PRS resource set is associated with a single beam transmitted from a single TRP (although a TRP may transmit one or more beams).

A PRS resource may also be defined by quasi-co-location and start PRB parameters. A quasi-co-location (QCL) parameter may define any quasi-co-location information of the DL PRS resource with other reference signals. The DL PRS may be configured to be QCL type D with a DL PRS or SS/PBCH (Synchronization Signal/Physical Broadcast Channel) Block from a serving cell or a non-serving cell. The DL PRS may be configured to be QCL type C with an SS/PBCH Block from a serving cell or a non-serving cell. The start PRB parameter defines the starting PRB index of the DL PRS resource with respect to reference Point A. The starting PRB index has a granularity of one PRB and may have a minimum value of 0 and a maximum value of 2176 PRBs.

A PRS resource set is a collection of PRS resources with the same periodicity, same muting pattern configuration (if any), and the same repetition factor across slots. Every time all repetitions of all PRS resources of the PRS resource set are configured to be transmitted is referred as an "instance". Therefore, an "instance" of a PRS resource set is a specified number of repetitions for each PRS resource and a specified number of PRS resources within the PRS resource set such that once the specified number of repetitions are transmitted for each of the specified number of PRS resources, the instance is complete. An instance may also be referred to as an "occasion." A DL PRS configuration including a DL PRS transmission schedule may be provided to a UE to facilitate (or even enable) the UE to measure the DL PRS.

Multiple frequency layers of PRS may be aggregated to provide an effective bandwidth that is larger than any of the bandwidths of the layers individually. Multiple frequency layers of component carriers (which may be consecutive and/or separate) and meeting criteria such as being quasi co-located (QCLed), and having the same antenna port, may be stitched to provide a larger effective PRS bandwidth (for DL PRS and UL PRS) resulting in increased time of arrival measurement accuracy. Stitching comprises combining PRS measurements over individual bandwidth fragments such that the stitched PRS may be treated as having been taken from a single measurement. Being QCLed, the different frequency layers behave similarly, enabling stitching of the PRS to yield the larger effective bandwidth. The larger effective bandwidth, which may be referred to as the bandwidth of an aggregated PRS or the frequency bandwidth of an aggregated PRS, provides for better time-domain resolution (e.g., of TDOA). An aggregated PRS includes a collection of PRS resources and each PRS resource of an aggregated PRS may be called a PRS component, and each PRS component may be transmitted on different component carriers, bands, or frequency layers, or on different portions of the same band.

RTT positioning is an active positioning technique in that RTT uses positioning signals sent by TRPs to UEs and by UEs (that are participating in RTT positioning) to TRPs. The TRPs may send DL-PRS signals that are received by the UEs and the UEs may send SRS (Sounding Reference Signal) signals that are received by multiple TRPs. A sounding reference signal may be referred to as an SRS or an SRS signal. In 5G multi-RTT, coordinated positioning may be used with the UE sending a single UL-SRS for positioning that is received by multiple TRPs instead of sending a separate UL-SRS for positioning for each TRP. A TRP that participates in multi-RTT will typically search for UEs that are currently camped on that TRP (served UEs, with the TRP being a serving TRP) and also UEs that are camped on neighboring TRPs (neighbor UEs). Neighbor TRPs may be TRPs of a single BTS (Base Transceiver Station) (e.g., gNB), or may be a TRP of one BTS and a TRP of a separate BTS. For RTT positioning, including multi-RTT positioning, the DL-PRS signal and the UL-SRS for positioning signal in a PRS/SRS for positioning signal pair used to determine RTT (and thus used to determine range between the UE and the TRP) may occur close in time to each other such that errors due to UE motion and/or UE clock drift and/or TRP clock drift are within acceptable limits. For example, signals in a PRS/SRS for positioning signal pair may be transmitted from the TRP and the UE, respectively, within about 10 ms of each other. With SRS for positioning being sent by UEs, and with PRS and SRS for positioning being conveyed close in time to each other, it has been found that radiofrequency (RF) signal congestion may result (which may cause excessive noise, etc.) especially if many UEs attempt positioning concurrently and/or that computational congestion may result at the TRPs that are trying to measure many UEs concurrently.

RTT positioning may be UE-based or UE-assisted. In UE-based RTT, the UE 200 determines the RTT and corresponding range to each of the TRPs 300 and the position of the UE 200 based on the ranges to the TRPs 300 and known locations of the TRPs 300. In UE-assisted RTT, the UE 200 measures positioning signals and provides measurement information to the TRP 300, and the TRP 300 determines the RTT and range. The TRP 300 provides ranges to a location server, e.g., the server 400, and the server determines the location of the UE 200, e.g., based on ranges to different TRPs 300. The RTT and/or range may be determined by the TRP 300 that received the signal(s) from the UE 200, by this TRP 300 in combination with one or more other devices, e.g., one or more other TRPs 300 and/or the server 400, or by one or more devices other than the TRP 300 that received the signal(s) from the UE 200.

Various positioning techniques are supported in 5G NR. The NR native positioning methods supported in 5G NR include DL-only positioning methods, UL-only positioning methods, and DL+UL positioning methods. Downlink-based positioning methods include DL-TDOA and DL-AoD. Uplink-based positioning methods include UL-TDOA and UL-AoA. Combined DL+UL-based positioning methods include RTT with one base station and RTT with multiple base stations (multi-RTT).

A position estimate (e.g., for a UE) may be referred to by other names, such as a location estimate, location, position, position fix, fix, or the like. A position estimate may be geodetic and comprise coordinates (e.g., latitude, longitude, and possibly altitude) or may be civic and comprise a street address, postal address, or some other verbal description of a location. A position estimate may further be defined relative to some other known location or defined in absolute terms (e.g., using latitude, longitude, and possibly altitude). A position estimate may include an expected error or uncertainty (e.g., by including an area or volume within which the location is expected to be included with some specified or default level of confidence).

### PRS measurement/reporting requests and indications of unreported PRS

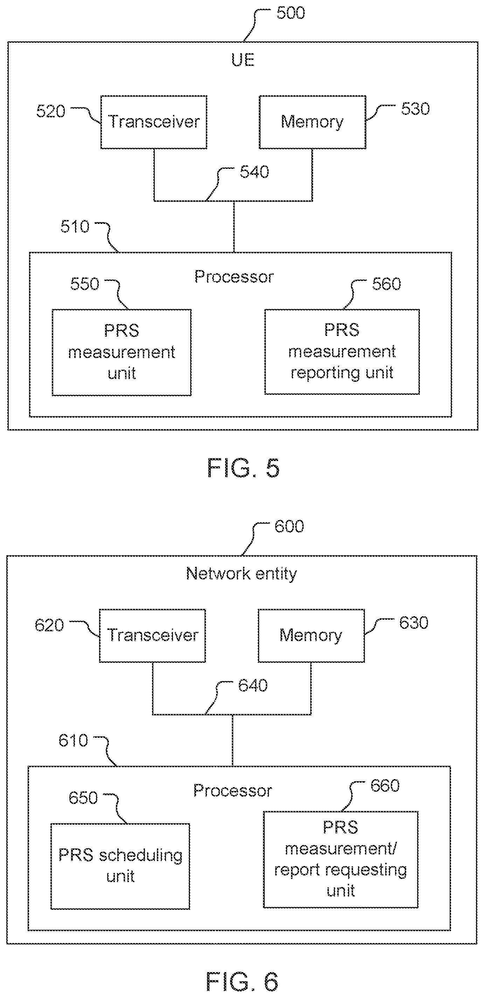

Referring to FIG. 5, with further reference to FIGS. 1-4, a UE 500 includes a processor 510, a transceiver 520, and a memory 530 communicatively coupled to each other by a bus 540. The UE 500 may include the components shown in FIG. 5, and may include one or more other components such as any of those shown in FIG. 2 such that the UE 200 may be an example of the UE 500. For example, the processor 510 may include one or more of the components of the processor 210. The transceiver 520 may include one or more of the components of the transceiver 215, e.g., the wireless transmitter 242 and the antenna 246, or the wireless receiver 244 and the antenna 246, or the wireless transmitter 242, the wireless receiver 244, and the antenna 246. Also or alternatively, the transceiver 520 may include the wired transmitter 252 and/or the wired receiver 254. The memory 530 may be configured similarly to the memory 211, e.g., including software with processor-readable instructions configured to cause the processor 510 to perform functions.

The description herein may refer to the processor 510 performing a function, but this includes other implementations such as where the processor 510 executes software (stored in the memory 530) and/or firmware. The description herein may refer to the UE 500 performing a function as shorthand for one or more appropriate components (e.g., the processor 510 and the memory 530) of the UE 500 performing the function. The processor 510 (possibly in conjunction with the memory 530 and, as appropriate, the transceiver 520) may include a PRS measurement unit 550 and a PRS measurement reporting unit 560. The PRS measurement unit 550 and the PRS measurement reporting unit 560 are discussed further below, and the description may refer to the processor 510 generally, or the UE 500 generally, as performing any of the functions of the PRS measurement unit 550 and the PRS measurement reporting unit 560, with the UE 500 being configured to perform the functions.

Referring to FIG. 6, with further reference to FIGS. 1-4, a network entity 600 includes a processor 610, a transceiver 620, and a memory 630 communicatively coupled to each other by a bus 640. The network entity 600 may include the components shown in FIG. 6, and may include one or more other components such as any of those shown in FIG. 3 and/or FIG. 4 such that the network entity 600 may be include a TRP and/or a server (e.g., a location server such as an LMF). The transceiver 620 may include one or more of the components of the transceiver 315 and/or the transceiver 415, e.g., the wireless transmitter 342 and the antenna 346 and possibly the wireless receiver 344, and/or the wireless transmitter 442 and the antenna 446 and possibly the wireless receiver 444. Also or alternatively, the transceiver 620 may include the wired transmitter 352 and/or the wired receiver 354 and/or the wired transmitter 452 and/or the wired receiver 454. The memory 630 may be configured similarly to the memory 311 and/or the memory 411, e.g., including software with processor-readable instructions configured to cause the processor 610 to perform functions.

The description herein may refer to the processor 610 performing a function, but this includes other implementations such as where the processor 610 executes software (stored in the memory 630) and/or firmware. The description herein may refer to the network entity 600 performing a function as shorthand for one or more appropriate components (e.g., the processor 610 and the memory 630) of the network entity 600 performing the function. The processor 610 (possibly in conjunction with the memory 630 and, as appropriate, the transceiver 620) may include a PRS scheduling unit 650 and a PRS measurement/report requesting unit 660. The PRS scheduling unit 650 and the PRS measurement/report requesting unit 660 are discussed further below, and the description may refer to the processor 610 generally, or the network entity 600 generally, as performing any of the functions of the PRS scheduling unit 650 and the PRS measurement/report requesting unit 660, with the network entity 600 being configured to perform the functions.

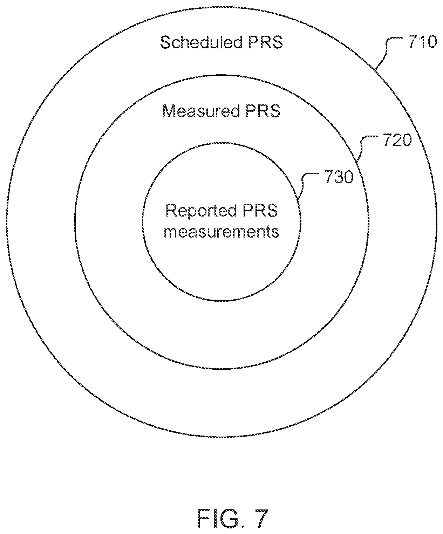

Referring to FIG. 7, the UE 500 may measure PRS scheduled by the network entity 600 and sent by the TRP 300, and report PRS measurements. For example, the UE 500 may report the capability(ies) of the UE 500 for processing and reporting PRS resources. The network entity 600 may send assistance data (AD) (directly and/or via the TRP 300) to the UE 500 indicating a schedule of PRS resources, with the schedule of PRS resources including scheduled PRS 710 (with the scheduled PRS 710 identified by corresponding PRS IDs (identities)), e.g., resource set IDs and resource IDs. The assistance data may be provided to the UE 500 to help the UE 500 measure and/or process positioning signals, e.g., to reduce time to measure the signals and/or to improve the accuracy of the measurements. The assistance data may include, for example, pathloss, spatial relation information, SSB (Synchronization Signal Block) information, PRS acquisition information (e.g., frequency, bandwidth, timing, coding, etc.) to help the UE 500 measure positioning signals. The UE 500 is configured to measure PRS, and may be limited to measuring fewer PRS resources than are scheduled, e.g., a maximum quantity of PRS resources that the UE 500 may measure (e.g., in a threshold time) may be less than a quantity of resources of the scheduled PRS 710. For example, the PRS measurement unit 550 of the UE 500 may be configured to measure a subset of the scheduled PRS resources, with the measured subset indicated as measured PRS 720. The UE 500 may be configured to report measurements of fewer PRS resources than are measured by the UE 500, e.g., a maximum quantity of PRS that the UE 500 may report (e.g., in a threshold time) may be less than a quantity of the measured PRS 720. For example, the PRS measurement reporting unit 560 of the UE 500 may be configured to report a subset of the measured PRS resources, with the reported subset indicated as reported PRS measurements 730. As an example, the network entity 600 may schedule 20 PRS resources and the UE 500 may be configured to measure up to five PRS resources and report measurements of up to four PRS resources. The PRS measurement reporting unit 560 may be configured to identify each PRS resource in the measurement report with a PRS resource ID (e.g., a DL PRS resource ID), and possibly a PRS resource set ID (e.g., a DL PRS resource set ID).

The PRS measurement reporting unit 560 may be configured with various quantities of reportable measurements. For example, for DL PRS measurement reports for DL-AoD, the PRS measurement reporting unit 560 may be configured with a maximum quantity (e.g., anywhere from one to eight) of DL PRS RSRP measurements providable by the PRS measurement reporting unit 560 for PRS resources from the same TRP. As another example, for DL PRS measurement reports for DL-TDOA, the PRS measurement reporting unit 560 may be configured to report anywhere from one to four values of DL RSTD measurements per pair of TRPs and/or to support providing zero measurements or one measurement of DL PRS RSRP. As another example, for multi-RTT, the PRS measurement reporting unit 560 may be configured to provide Rx-Tx measurements and to support RSRP measurements. The PRS measurement reporting unit 560 may be configured to provide a maximum quantity of UE Rx-Tx time difference measurements corresponding to a single SRS resource/resource set for positioning with each measurement corresponding to a single DL PRS resource/resource set (on the same frequency layer).

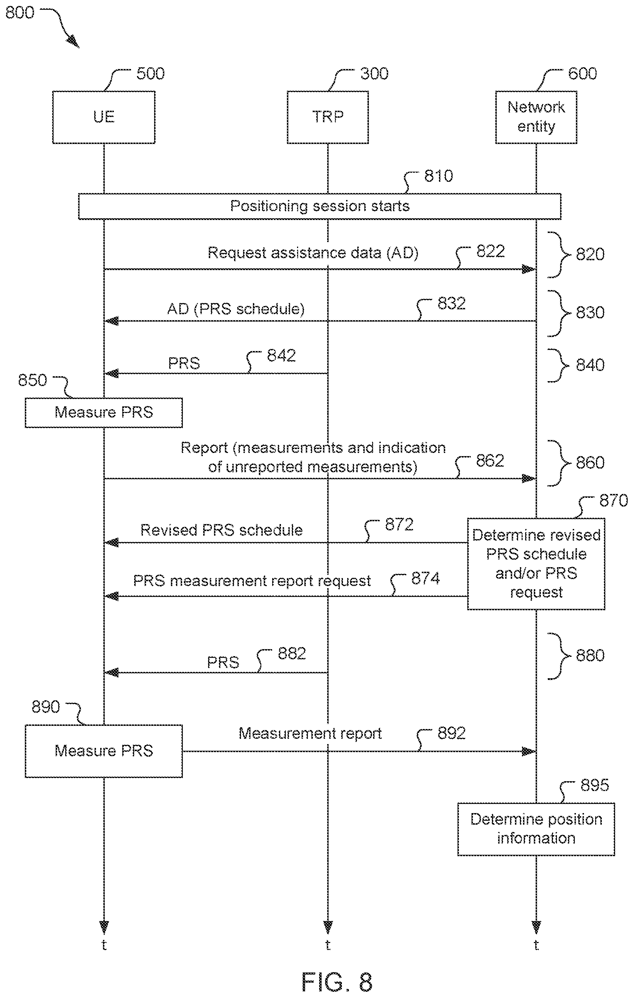

Referring to FIG. 8, with further reference to FIGS. 1-7, a signaling and process flow 800 for providing and measuring PRS resources, requesting reporting of PRS resource measurement, and reporting PRS resource measurement includes the stages shown. The flow 800 is an example, as stages may be added, rearranged, and/or removed. Signals may be exchanged directly between the UE 500 and the network entity 600 in the flow 800 and/or may be exchanged via the TRP 300. The network entity 600 may include the TRP 300.

At stage 810, a positioning session is started. For example, the UE 500 and the network entity 600 perform a handshaking procedure to establish a communication session for exchanging signaling for use in determining a position (location) of the UE 500.

At stage 820, the UE 500 sends a request 822 for assistance data (AD). The UE 500 (e.g., the PRS measurement unit 550) may send the request 822 to obtain AD to help the PRS measurement unit 550 measure incoming PRS. The request 822 may include a capability report indicating one or more capabilities of the UE 500 for measuring and/or reporting PRS resources (e.g., maximum PRS resources measurable by the UE 500, maximum PRS resources for which measurements may be reported, etc.).

At stage 830, the network entity 600 determines and sends AD 832, including a PRS schedule, to the UE 500. The PRS scheduling unit 650 is configured to determine the PRS schedule, and may be configured to determine the PRS schedule independently of content of the request 822 (e.g., other than a request for AD generally), or may be configured to determine the PRS schedule based on content of the request 822 (e.g., based on one or more specifically-requested PRS resources, etc.), or may be configured to determine the PRS schedule with or without content of the request 822 (e.g., to determine on a request-by-request basis whether to determine the PRS schedule based on content of the request 822). The PRS scheduling unit 650 may be configured to determine the PRS schedule based on data in addition to or instead of content of the request 822, e.g., based on a measurement report (e.g., as discussed further herein such as with respect to stage 870). The PRS schedule indicates the timing and frequency of DL PRS resources to assist the UE 500 to measure the scheduled PRS resources. The PRS schedule is provided by the network entity 600 to the UE 500 and the TRP 300 (e.g., provided to the UE 500 via the TRP 300). The PRS scheduling unit 650 of the network entity 600 (e.g., a server such as an LMF) may send an indication of (e.g., parameters of) a PRS schedule to the TRP 300 and the TRP 300 (e.g., the processor 310) may determine the PRS schedule based on the indication from the network entity 600.

At stage 840, the TRP 300 sends PRS 842 to the UE 500. For example, the TRP 300 sends the PRS 842 in accordance with the PRS schedule, with the PRS 842 being the scheduled PRS 710.

At stage 850, the UE 500 measures at least some of the PRS 842. For example, the PRS measurement unit 550 is configured to measure PRS resources, e.g., up to a PRS resource measurement limit. The PRS measurement unit 550 may, for example, measure all of the PRS 842 or less than all of the PRS 842, e.g., may measure the measured PRS 720 of the scheduled PRS 710. A difference in PRS resources between the scheduled PRS 710 and the measured PRS 720 is referred to as scheduled but unmeasured PRS resources (which may also be called scheduled but unmeasured PRS).

At stage 860, the UE 500 reports measured PRS resources. For example, the PRS measurement reporting unit 560 sends a PRS measurement report 862 to the network entity 600. The PRS measurement report 862 may comprise one message or multiple separate messages. The report 862 includes one or more measurements each corresponding to a PRS resource. The PRS measurement reporting unit 560 may be configured (statically (e.g., in the memory 530 during manufacture) or dynamically (e.g., in accordance with a message received via the transceiver 520, which may override a static configuration)) with a limit of a quantity of PRS resources for which measurement may be reported. For example, the PRS measurement reporting unit 560 may be configured to report the reported PRS measurements 730 subset of the measured PRS 720.

The PRS measurement reporting unit 560 may be configured to indicate, e.g., in the report 862, measured PRS resources not included in the report 862. For example, the PRS measurement reporting unit 560 may provide one or more indications in the report 862 of the PRS ID(s) for each PRS resource for which the PRS measurement unit 550 determined a respective measurement but that for which no measurement is included in the report 862, i.e., the measured but unreported PRS resources, e.g., the difference between the measured PRS 720 and the reported PRS measurements 730. The indication of measured but unreported PRS resources may be explicit or implicit. For an implicit indication, the PRS measurement reporting unit 560 may produce the report 862 to include the PRS ID(s) of reported PRS resources and an information element of measured_PRS_ID that indicates the PRS IDs of all measured PRS resources.

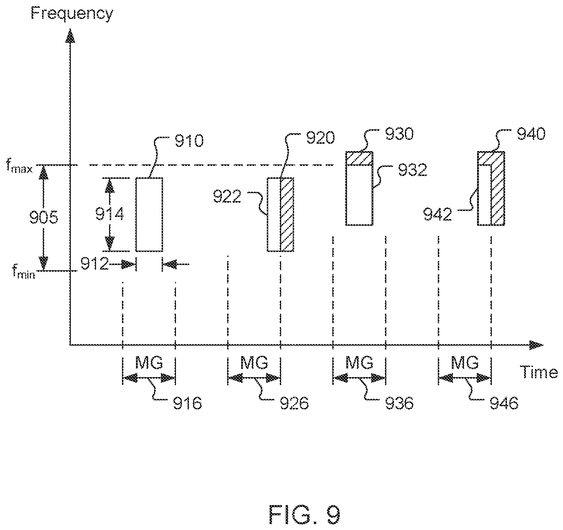

Referring also to FIG. 9, the PRS measurement unit 550 may be able to process PRS resources with varying degrees of processing. For example, the PRS measurement unit 550 may be able to fully process a PRS resource 910 due to the PRS resource 910 being completely within a measurement gap 916 in time and within a PRS measurement bandwidth 905 of the PRS measurement unit 550. The PRS measurement unit 550 may be configured to process a PRS resource partially using a reduced (compared to full processing) time domain allocation and/or a reduced frequency domain allocation. The PRS measurement unit 550 may be configured to partially process a PRS resource due to one or more of a variety of reasons, e.g., the PRS resource being partially outside of a measurement gap, the UE 500 electing to process a reduced bandwidth and/or reduced symbol quantity (e.g., to save power voluntarily or in response to the UE 500 being in a power-limited condition).

The PRS measurement reporting unit 560 may indicate a degree of successfulness of processing a PRS resource. For example, the PRS measurement reporting unit 560 may be configured to indicate whether a PRS resource was processed successfully including, for successful processing, whether the PRS resource was processed fully or partially. An indication of full processing may serve as the indication of successful processing in addition to the indication of full processing. An indication of partial processing may serve as the indication of successful processing in addition to the indication of partial processing. The PRS measurement reporting unit 560 may be configured to provide a processing indication that the corresponding PRS resource 910 was processed fully, i.e., that an entire time span 912 and an entire frequency span 914 of the PRS resource 910 were processed (i.e., all REs of the time span 912 and frequency span 914 were processed). The PRS measurement reporting unit 560 may indicate that a PRS resource 920 was processed partially in time (and may indicate a portion 922 of the PRS resource 920 that was processed) due to the PRS resource 920 being fully within the PRS measurement bandwidth 905 and partially outside of a measurement gap 926. The PRS measurement reporting unit 560 may indicate that a PRS resource 930 was processed partially in frequency (and may indicate a portion 932 of the PRS resource 930 that was processed) due to the PRS resource 930 being partially outside the PRS measurement bandwidth 905 and fully within a measurement gap 936. The PRS measurement reporting unit 560 may indicate that a PRS resource 940 was processed partially in time and partially in frequency (and may indicate a portion 942 of the PRS resource 940 that was processed) due to the PRS resource 940 being partially outside the PRS measurement bandwidth 905 and partially outside of a measurement gap 946. The PRS measurement reporting unit 560 may be configured to explicitly indicate a portion of a partially-processed PRS resource that was processed (e.g., that was able to be processed) by specifying that portion, e.g., in terms of time (e.g., symbols) and/or frequency. The PRS measurement reporting unit 560 may be configured to implicitly indicate a portion of a PRS resource that was processed by indicating the portion of a partially-processed PRS resource that the PRS measurement unit 550 did not process (e.g., was unable to process). The PRS measurement reporting unit 560 may be configured to indicate that processing of a scheduled PRS resource was unsuccessful if, for example, the PRS measurement unit 550 did not measure the PRS resource at all (e.g., due to being completely outside the PRS measurement bandwidth 905 and/or completely outside a measurement gap) or was unable to measure the PRS resource with at least a threshold quality (e.g., a threshold RSRP).

The PRS measurement reporting unit 560 may be configured to report the successfulness of processing of a PRS resource in one or more of various ways. For example, the PRS measurement reporting unit 560 may be configured to provide a Boolean indication of full processing or partial processing. As another example, the PRS measurement reporting unit 560 may be configured to provide a Boolean indication of successful processing or unsuccessful processing. As another example, the PRS measurement reporting unit 560 may be configured to provide a coded indication of full processing, partial processing in time, partial processing in frequency, or partial processing in time and partial processing in frequency. The PRS measurement reporting unit 560 may be configured to provide, for PRS that are partially processed, an indication that the processing was partial without an indication of how partial, or may be configured to provide an indication of what frequency portion and/or what time portion of the PRS resource was processed (and/or what frequency portion and/or what time portion of the PRS resource was not processed).

The network entity 600 may use the indication of degree of successfulness of PRS resource processing to affect measurement processing by the network entity 600. For example, the network entity 600 may integrate measurements differently based on different degrees of corresponding PRS resource measurement. For example, if a first PRS resource is fully processed and a second PRS resource is partially processed and measurements for both the first and second PRS resources have the same (or at least a similar) quality metric value, then the network entity 600 may weight the measurement for the fully-processed PRS resource (the first PRS resource in this example) more than the measurement for the partially-processed PRS resource (the second PRS resource in this example).

At stage 870, the network entity 600 may determine and send a revised PRS schedule 872 and/or a PRS measurement report request 874 to the UE 500. For example, the PRS scheduling unit 650 may determine one or more desired PRS resource measurements that were not reported (and possibly not even measured). The PRS scheduling unit 650 may determine the revised PRS schedule 872 (revised relative to the PRS schedule in the AD 832) that will help ensure that one or more of the desired PRS resource measurement(s) is(are) reported. For example, the revised PRS schedule 872 may include only PRS resources desired to be measured. As another example, if the network entity 600 wants at least one of D desired PRS resources to be measured, and the UE 500 is configured to measure and report measurements of up to N PRS resources, then the PRS scheduling unit 650 may determine the revised PRS schedule 872 (or the original PRS schedule in stage 830) to have R PRS resources that include the D desired PRS resources such that N > R - D (i.e., the maximum number of reportable measurements is greater than the number of scheduled resources other than the desired resources such that the maximum number of reportable measurements is enough to include at least one desired PRS resource measurement). As another example, the PRS measurement/report requesting unit 660 may be configured to produce the PRS measurement report request 874 to have the UE 500 report a measurement for each of one or more of the desired PRS resources. The PRS measurement/report requesting unit 660 may produce the PRS measurement report request 874 based on the report 862, e.g., to have the UE 500 report one or more of the measured but unreported PRS resource measurement(s). The PRS measurement/report requesting unit 660 may be configured to produce the PRS measurement report request 874 independently of the revised PRS schedule 872 produced, if at all, by the PRS scheduling unit 650. The PRS measurement/report requesting unit 660 may also or alternatively be configured to produce the PRS measurement report request 874 based on, or in conjunction with, the revised PRS schedule 872 produced by the PRS scheduling unit 650. The network entity 600 sends the revised PRS schedule 872 to the UE 500 and the TRP 300 (e.g., to the UE 500 via the TRP 300).

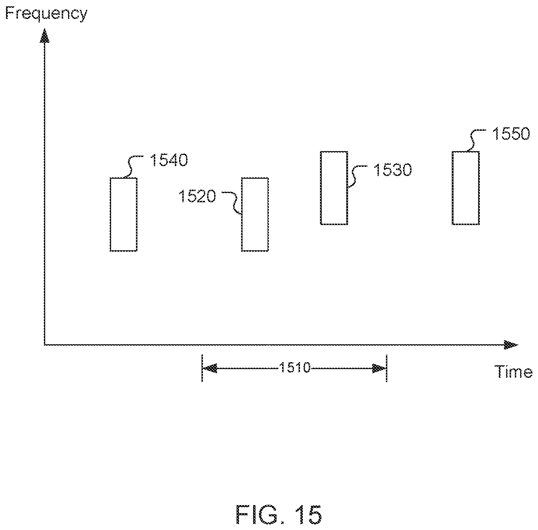

The PRS measurement report request 874 may request to have the UE 500 prioritize reporting of one or more PRS resource measurements made by the UE 500 of one or more suggested PRS resources. For example, the PRS measurement report request 874 may indicate to have the UE 500 prioritize reporting of a PRS resource measurement from the measured but unreported list, or to change a prioritization of PRS resource measurement reporting to give higher priority to one or more specified PRS resources than would be given by the UE 500 absent the request 874. As another example, the PRS measurement report request 874 may implicitly indicate one or more PRS resources for higher-priority reporting. For example, referring also to FIG. 15, the request 874 may indicate a time window 1510 for higher-priority PRS and the UE 500 may determine which PRS are scheduled for the time window 1510 (in this example, PRS resources 1520, 1530) and tag those PRS resource(s) as suggested PRS resource(s) for higher-priority reporting while other PRS resource(s) scheduled outside the time window 1510 (here PRS resources 1540, 1550) are not tagged as suggested PRS resource(s) for higher-priority reporting. The prioritization may put the one or more suggested PRS resources as the highest-priority PRS for reporting. The prioritization may result in the UE 500 reporting a measurement of a suggested PRS resource instead of measurement of another PRS resource, i.e., reporting a measurement of a suggested PRS resource that would be part of the measured but unreported PRS absent the UE 500 being made aware of the PRS measurement report request 874 (to have the suggested PRS resource be part of the reported PRS measurements 730 instead of in the measured PRS 720 but not in the reported PRS measurements 730). The PRS measurement report request 874 may include one or more groups of PRS resources. A group may have a priority of the PRS resources within the group to indicate the priority for reporting measurement(s) if fewer than all PRS resource measurements for a group may be reported. Multiple groups may have relative priority between them such that the request 874 may request to have the UE 500 prioritize reporting measurement of PRS resources of the groups according to the priority (e.g., to affect which group has corresponding measurement(s) reported if fewer than all groups can have their measurement(s) reported).

The PRS measurement report request 874 may request to have the UE 500 prioritize both measurement and reporting of one or more suggested PRS resources. For example, the PRS measurement report request 874 may indicate (or be interpreted by the UE 500) to have the UE 500 prioritize measurement and reporting of a PRS resource that was scheduled but not measured by the UE 500 according to the report 862. The prioritization may put the one or more suggested PRS resources as the highest-priority PRS resource(s) for measuring, and possibly also for reporting. The prioritization may result in the UE 500 measuring a suggested PRS resource instead of another PRS resource, i.e., measuring a suggested PRS resource that would not be measured absent the UE 500 being made aware of the PRS measurement report request 874, and reporting the suggested PRS resource (to have the suggested PRS resource be part of the reported PRS measurements 730 instead of in the scheduled PRS 710 but not the measured PRS 720).

At stage 880, the TRP 300 sends PRS 882 according to the revised PRS schedule 872 to the UE 500. The TRP 300, having received an indication of the revised PRS schedule 872 from the network entity 600 at stage 870, provides the appropriate PRS 882 to the UE 500.

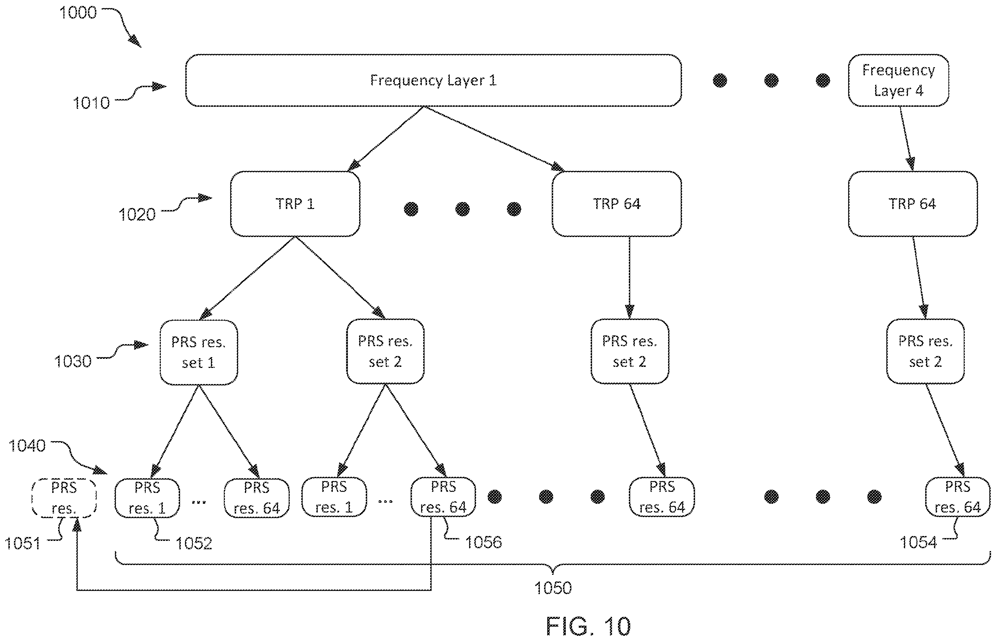

At stage 890, the UE 500 measures at least some of the PRS 882. For example, referring also to FIG. 10, the UE 500 may be configured to implement a standard priority to measure PRS resources and/or report PRS resource measurements absent receipt of the PRS measurement report request 874. The UE 500 may be configured to measure scheduled PRS resources according to the standard priority, e.g., measure the M-highest-priority scheduled PRS according to the standard priority wherein M is a quantity (e.g., a maximum quantity) of PRS resources that the PRS measurement unit 550 will measure. For example, an example standard priority 1000 is a hierarchical priority of frequency layers 1010, TRPs 1020, PRS resource sets 1030, and PRS resources 1040. In the standard priority 1000, the frequency layers 1010 have a frequency layer priority such that all the scheduled PRS resources of a frequency layer will be measured before any PRS resource of the next-highest-priority frequency layer. Similarly, the TRPs 1020 associated with each of the frequency layers 1010 have a TRP priority, the PRS resource sets 1030 associated with each TRP priority have a PRS resource set priority, and the PRS resources 1040 associated with each PRS resource set have a PRS resource priority. There may be different TRP priorities, different PRS resource set priorities, and/or different PRS resource priorities. Consequently, the PRS resources 1040 are organized into a PRS resource priority 1050 indicating the priority of PRS resources from highest-priority PRS resource 1052 to lowest-priority PRS resource 1054. The PRS measurement unit 550 and the PRS measurement reporting unit 560 may use the same priority to determine which PRS resources to measure and which PRS resource measurements to report. In the example standard priority 1000, there are four frequency layers 1010, 64 TRPs per frequency layer, two resource sets per TRP, and 64 resources per resource set, but these are examples and other quantities of frequency layers, TRPs per frequency layer, resource sets per TRP, and/or resources per resource set may be used.

The PRS measurement unit 550 may be configured to determine a revised measurement priority based on one or more indications in the PRS measurement report request 874 indicating priority measurement for one or more suggested PRS resources. For example, the PRS measurement unit 550 may change the PRS resource priority 1050 by assigning higher priority(ies) to the PRS resource(s) suggested in the request 874 for priority measurement, effectively moving one or more PRS resources, e.g., moving a PRS resource 1056 toward the highest-priority PRS resource 1052, and possibly becoming the highest-priority PRS resource 1052 or becoming a new highest-priority PRS resource 1051. The request may indicate a specific priority to which to move a suggested PRS resource, or a priority (e.g., a highest priority) may be assumed. The request 874 may indicate multiple PRS resources to move to higher-priority location(s) in the revised measurement priority relative to the standard priority, e.g., to the highest-priority positions in the revised measurement priority. The PRS measurement unit 550 may be configured to apply a supplemental priority such as a standard priority to the suggested PRS resources in the request 874 to determine which PRS resources to measure (e.g., if a measurement limit is greater than the suggested PRS resources in the request 874). Thus, the suggested PRS resources may be prioritized for measurement according to the revised measurement priority followed by the scheduled but unsuggested PRS resources prioritized according to the supplemental (e.g., standard) priority.

Also or alternatively, the PRS measurement reporting unit 560 may be configured to determine a revised reporting priority based on the PRS measurement report request 874. The PRS measurement reporting unit 560 may be configured to report PRS resource measurements in accordance with a priority such as a standard priority for PRS resource measurements. The PRS measurement reporting unit 560 may be configured to report PRS resource measurements (up to a PRS resource reporting limit) using the same priority used by the PRS measurement unit 550 or a different priority. For example, the PRS measurement reporting unit 560 may be configured to determine a revised reporting priority based on one or more indications in the PRS measurement report request 874 indicating one or more PRS resources for priority reporting, and the revised reporting priority may be different from the revised measurement priority. The PRS measurement reporting unit 560 may be configured to determine the revised reporting priority similarly to the description above with respect to determining the revised measurement priority, but using one or more indications in the request 874 directed to PRS resource measurement reporting which may be independent of one or more indications in the request 874 directed to PRS resource measurement.

The PRS measurement report request 874 may indicate one or more groups of PRS resources for prioritized reporting of respective measurements. The groups may indicate for the UE 500 to prioritize reporting (and measurement as appropriate) of all PRS resources in a group in response to the UE 500 determining to report a measurement of any of the PRS resources in the group. For example, the request 874 may not affect a measurement priority implemented by the UE 500 (e.g., to revise a priority from a standard priority or a previously-determined revised priority), but will indicate that if a PRS resource of an indicated group is determined to be measured and reported, then the UE 500 should revise the priority(ies) implemented by the UE 500 to prioritize measurement and reporting of the other members of the group. As another example, the request 874 may not affect a measurement priority implemented by the UE 500, but will indicate that if a PRS resource of an indicated group is determined to be measured and reported, then the UE 500 should revise the reporting priority implemented by the UE 500 to prioritize reporting of the other members of the group, if measured. For example, groups of PRS resources of {0, 1, 2, 3}, {4, 5, 6, 7}, and {2, 3, 4} may be indicated such that, for example, if the UE 500 determines to report measurement of PRS resource 4, then the UE 500 will prioritize reporting measurements of (and possibly prioritize measuring) PRS resources 5, 6, and 7 as well. Within one or more of the groups the resources may be prioritized, e.g., such that if the UE 500 determines to report measurement of resource 5, and the resources are arranged in order of priority, and the UE 500 is able to report up to three resource measurements in the group containing resource 5, then the UE 500 may report measurements of resources 4, 5, and 6, but not 7. Prioritization of groups and resources within groups may result in partial-group reporting without reporting a group that could be fully reported without the prioritization. Other prioritization rules could be applied, such as prioritization between groups such as a prioritization that alternates between resources of groups. For example, the UE 500 may prioritize reporting measurement of resource 0, then resource 4, then resource 1, etc. until either all (available, e.g., measured) resources in the groups {0, 1, 2, 3} and {4, 5, 6, 7} are reported or the UE 500 reaches a resource reporting limit. As another example, with these same groups specified, if the UE 500 determines to report measurement of PRS resource 3, then the UE 500 will prioritize reporting measurement of (and possibly prioritize measuring) PRS resources 0, 1, and 2, and prioritize reporting measurement of (and possibly prioritize measuring) PRS resources 2 and 4. As another example, a group indicated by the request 874 may be a request to measure all PRS resources of a group or none at all and/or to report measurements for all PRS resources of the group or none at all. Multiple groups may be specified, and the groups may have a priority such that if not all PRS resources of all the groups may be reported (e.g., due to exceeding a reporting resource limit), then the groups may be evaluated by the UE 500 in order of priority to determine which PRS resources to measure and/or report.

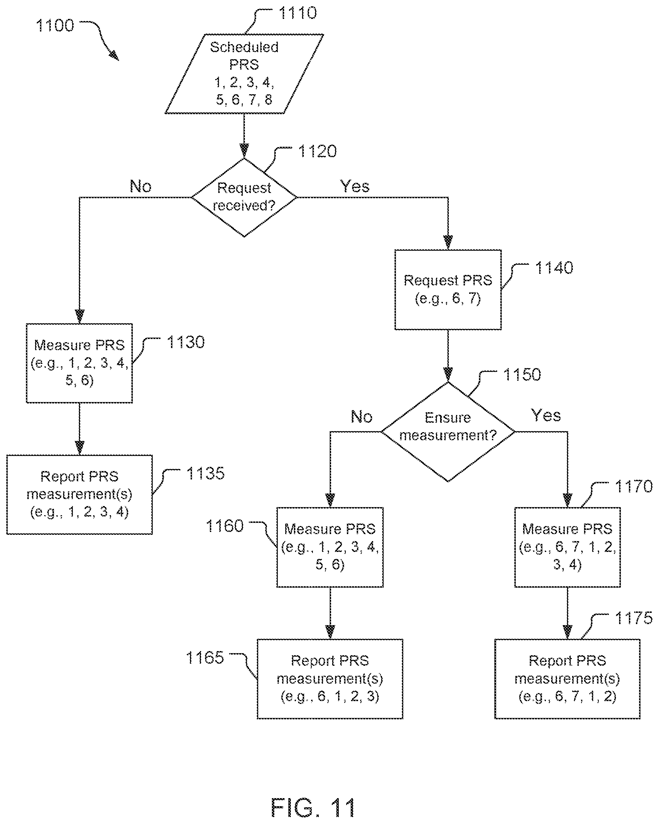

The PRS measurement reporting unit 560 sends a measurement report 892 with PRS resource measurements in accordance with the reporting priority(ies), whether standard or revised. For example, referring also to FIG. 11, a flow 1100 illustrates an example of measuring and reporting of PRS resources with and without a PRS measurement report request. In this example, eight PRS resources are scheduled, the UE 500 is configured to measure up to six PRS resources and to report measurements for up to four PRS resources. At stage 1110, eight PRS resources labeled 1, 2, 3, 4, 5, 6, 7, 8 are received by the UE 500, and a standard priority implemented by the UE 500 prioritizes the PRS resources in numerical order. At stage 1120, the flow 1100 branches depending on whether the PRS measurement report request 874 is received. If the request 874 is not received, then the flow 1100 proceeds to stage 1130 where the six highest-priority PRS resources (1-6) according to the standard priority are measured, and then at stage 1135 the four highest-priority measured PRS resources (1-4) according to the standard priority are reported. If the request 874 has been received, then from stage 1120 the flow 1100 proceeds to stage 1140 where the request 874 is determined, in this example, to request priority be given to PRS resources 6 and 7. At stage 1150, the flow 1100 branches depending on whether the request 874 is for both prioritized measurement and reporting or for prioritized reporting only. If the request 874 is for prioritized reporting only, then the flow 1100 proceeds to stage 1160 where the six highest-priority PRS resources (1-6) according to the standard priority are measured, and then at stage 1165 the four highest-priority measured PRS resources (6, 1-3) are reported according to a revised priority putting reporting of the measurement of PRS resource 6 as the highest priority. If the request 874 is for prioritized measurement and reporting, then from stage 1150 the flow 1100 proceeds to stage 1170 where the six highest-priority PRS resources (6, 7, 1-4) are measured in view of a revised measurement priority putting PRS resources 6 and 7 as the highest priorities, and then at stage 1175 the four highest-priority measured PRS resources (6, 7, 1, 2) are reported according to the revised priority putting reporting of the measurement of PRS resources 6 and 7 as the highest priority. The measurement report 892 may include measurements for PRS resources that were not requested by the network entity 600 (e.g., if the network entity 600 requested fewer measurements than the UE 500 is configured to provide). Also, the reporting priority could be different from the measurement priority.

At stage 895, the network entity 600 determines position information. For example, the processor 610 uses the measurement report 892 and other information (e.g., measurements from one or more TRPs 300 of one or more signals from the UE 500) to determine position information for the UE 500, e.g., to determine one or more signal measurements, one or more ranges (e.g., pseudoranges), and/or one or more location estimates for the UE 500.

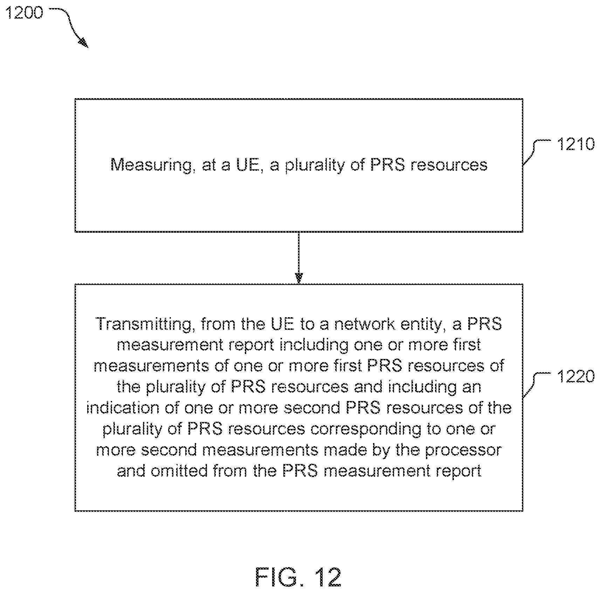

Referring to FIG. 12, with further reference to FIGS. 1-11, a method 1200 of measurement reporting for determination of a position of a UE includes the stages shown. The method 1200 is, however, an example and not limiting. The method 1200 may be altered, e.g., by having stages added, removed, rearranged, combined, performed concurrently, and/or having single stages split into multiple stages.

At stage 1210, the method 1200 includes measuring, at the UE, a plurality of PRS resources. For example, the PRS measurement unit 550 measures the PRS 842 at stage 850 of the flow 800. The processor 510, possibly in combination with the memory 530, in combination with the transceiver 520 (e.g., the wireless receiver 244 and the antenna 246) may comprise means for measuring a plurality of PRS resources.

At stage 1220, the method 1200 includes transmitting, from the UE to a network entity, a PRS measurement report including one or more first measurements of one or more first PRS resources of the plurality of PRS resources and including an indication of one or more second PRS resources of the plurality of PRS resources corresponding to one or more second measurements made by the processor and omitted from the PRS measurement report. For example, the PRS measurement reporting unit 560 transmits the report 862 indicating PRS resource measurements and measured but unreported PRS resources. The report (e.g., the report 862) may comprise multiple separate messages. The PRS measurement unit 550 may measure, at stage 1210, measure more PRS resources than the one or more first PRS resources and the one or more second PRS resources combined. The processor 510, possibly in combination with the memory 530, in combination with the transceiver 520 (e.g., the wireless transmitter 242 and the antenna 246) may comprise means for transmitting the PRS measurement report.

Implementations of the method 1200 may include one or more of the following features. In an example implementation, the indication of the one or more second PRS resources comprises a PRS resource identity for each of the one or more second PRS resources. In another example implementation, the PRS measurement report includes a further indication corresponding to at least one of the one or more first measurements and indicating whether at least one of the one or more first measurements resulted from full processing of a respective one of the one or more first PRS resources or partial processing of the respective one of the one or more first PRS resources. For example, the PRS measurement reporting unit 560 may produce the measurement report 862 to indicate, for one or more of the reported measurements, whether a PRS resource was fully processed to determine the corresponding measurement (e.g., providing a coded Boolean indication of full processing). In a further example implementation, the further indication indicates whether the at least one of the one or more first measurements resulted from partial time processing of the respective one of the one or more first PRS resources, or partial frequency processing of the respective one of the one or more first PRS resources, or a combination thereof. For example, the PRS measurement reporting unit 560 may produce the measurement report 862 to indicate, for one or more of the reported measurements, whether a PRS resource was partially processed to determine the corresponding measurement (e.g., providing a coded Boolean indication of partial processing). The indication of partial processing may indicate that the corresponding PRS resource was partially processed in time, or partially processed in frequency, or partially processed in time and partially processed in frequency (i.e., less than the full bandwidth of the PRS resource was processed and fewer than all symbols of the PRS resource were processed) to determine the corresponding measurement.

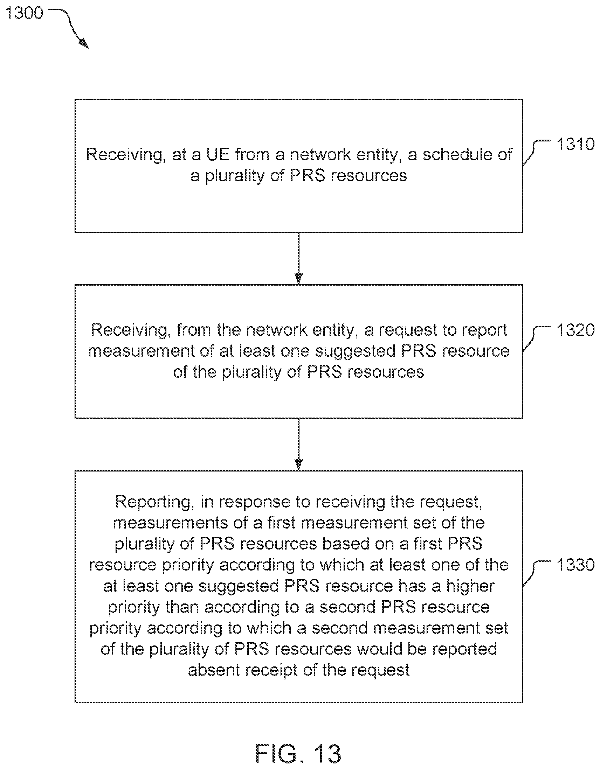

Referring to FIG. 13, with further reference to FIGS. 1-11, a method 1300 of measuring positioning reference signals includes the stages shown. The method 1300 is, however, an example and not limiting. The method 1300 may be altered, e.g., by having stages added, removed, rearranged, combined, performed concurrently, and/or having single stages split into multiple stages.

At stage 1310, the method 1300 includes receiving, at a UE from a network entity, a schedule of a plurality of PRS resources. For example, the PRS measurement unit 550 receives a PRS schedule in the assistance data 832, and/or the revised PRS schedule 872, indicating PRS resources to be transmitted by the TRP 300. The processor 510, possibly in combination with the memory 530, in combination with the transceiver 520 (e.g., the wireless receiver 244 and the antenna 246) may comprise means for receiving the schedule of the plurality of PRS resources.

At stage 1320, the method 1300 includes receiving, from the network entity, a request to report measurement of at least one suggested PRS resource of the plurality of PRS resources. For example, the PRS measurement unit 550 receives the PRS measurement report request 874 indicating one or more PRS resources for the UE 500 to report, e.g., for which to prioritize reporting and possibly prioritize measuring. The processor 510, possibly in combination with the memory 530, in combination with the transceiver 520 (e.g., the wireless receiver 244 and the antenna 246) may comprise means for receiving the request.

At stage 1330, the method 1300 includes reporting, in response to receiving the request, measurements of a first measurement set of the plurality of PRS resources based on a first PRS resource priority according to which at least one of the at least one suggested PRS resource has a higher priority than according to a second PRS resource priority according to which a second measurement set of the plurality of PRS resources would be reported absent receipt of the request. For example, the PRS measurement reporting unit 560 adjusts a priority to a revised priority based on the request 874 to make the PRS resources suggested in the request 874 have higher priority than before the adjustment, and reports (e.g., as discussed with respect to stage 890) one or more measurements of the suggested PRS resource(s) based on the revised priority. A suggested PRS resource may be higher in priority in the first PRS resource priority than in the second PRS resource priority by, for example, being in the first PRS resource priority and not in the second PRS resource priority or being in a higher-priority position in the first PRS resource priority than the position of the PRS resource in the second PRS resource priority. The processor 510, possibly in combination with the memory 530, in combination with the transceiver 520 (e.g., the wireless transmitter 242 and the antenna 246) may comprise means for reporting measurements of the first measurement set.

Implementations of the method 1300 may include one or more of the following features. In an example implementation, the method 1300 comprises measuring the first measurement set of the plurality of PRS resources based on the first PRS resource priority. For example, the PRS measurement unit 550 selectively measures the PRS resources to obtain the measurements of the first measurement set. The processor 510, possibly in combination with the memory 530, in combination with the transceiver 520 (e.g., the wireless receiver 244 and the antenna 246) may comprise means for measuring the first measurement set. In another example implementation, the method 1300 comprises modifying the second PRS resource priority to produce the first PRS resource priority such that the at least one suggested PRS resource occupies a highest-priority portion of the first PRS resource priority. For example, the PRS measurement unit 550 and/or the PRS measurement reporting unit 560 may move a suggested PRS resource, e.g., the PRS resource 1056, in a priority to a highest-priority in a revised priority, e.g., to be the new highest-priority PRS resource 1051. The processor 510, possibly in combination with the memory 530, may comprise means for modifying the second PRS resource priority to produce the first PRS resource priority. In a further example implementation, reporting the first measurement set of the plurality of PRS resources comprises reporting the at least one suggested PRS resource in accordance with a hierarchical priority of a plurality of positioning frequency layers according to a positioning frequency layer priority, and according to a respective TRP priority (transmission/reception point priority) associated with each positioning frequency layer of the positioning frequency layer priority, and according to a respective PRS resource set priority associated with each TRP priority, and according to a respective PRS resource priority associated with each PRS resource set priority. The PRS resources (and/or a subset thereof such as the suggested PRS resource(s)) may also or alternatively be measured in accordance with this hierarchical priority.

Also or alternatively, implementations of the method 1300 may include one or more of the following features. In an example implementation, the method 1300 comprises producing the first PRS resource priority, in response to the at least one suggested PRS resource including a group of suggested PRS resources and in response to the second PRS priority including a particular member of the group of suggested PRS resources, such that the first PRS resource priority consecutively includes all members of the group of suggested PRS resources. For example, the suggested PRS resource(s) may be moved to the highest-priority position(s) in the priority, with N suggested PRS resources occupying the N-highest-priority positions in order. The 510, possibly in combination with the memory 530, may comprise means for producing the first PRS resource priority. In another example implementation, the method 1300 comprises producing the first PRS resource priority, in response to the at least one suggested PRS resource including a plurality of groups of suggested PRS resources and in response to the second PRS resource priority including at least one member of each of the plurality of groups of suggested PRS resources, such that the first PRS resource priority includes the plurality of groups of suggested PRS resources in order of priority of the plurality of groups of suggested PRS resources. For example, the suggested groups of PRS resources may be moved to the highest-priority positions in the priority, with suggested PRS resource groups occupying the highest-priority positions in order, such that M PRS resources of the combination of the suggested PRS resource groups occupy the M-highest-priority positions in order. The 510, possibly in combination with the memory 530, may comprise means for producing the first PRS resource priority. In another example implementation, the method 1300 comprises producing the first PRS resource priority, in response to the at least one suggested PRS resource including a group of suggested PRS resources and in response to the second PRS resource priority including a particular member of the group of suggested PRS resources and a limit of a quantity of PRS resource measurements being exceeded if the group of suggested PRS resources are reported, such that the first PRS resource priority excludes all members of the group of suggested PRS resources. For example, the PRS measurement reporting unit 560 may report measurements for all PRS resources of a suggested group or none of the measurements of the suggested group, reporting none if a reporting limit would prevent measurements of all of the PRS resources in the group from being reported. The 510, possibly in combination with the memory 530, may comprise means for producing the first PRS resource priority. In another example implementation, the request indicates a time window, and the method 1400 comprises identifying one or more of the plurality of PRS resources that are scheduled for the time window as the at least one suggested PRS resource of the plurality of PRS resources. The processor 510, possibly in combination with the memory 530, may comprise means for identifying one or more of the plurality of PRS resources that are scheduled for the time window as the at least one suggested PRS resource of the plurality of PRS resources.

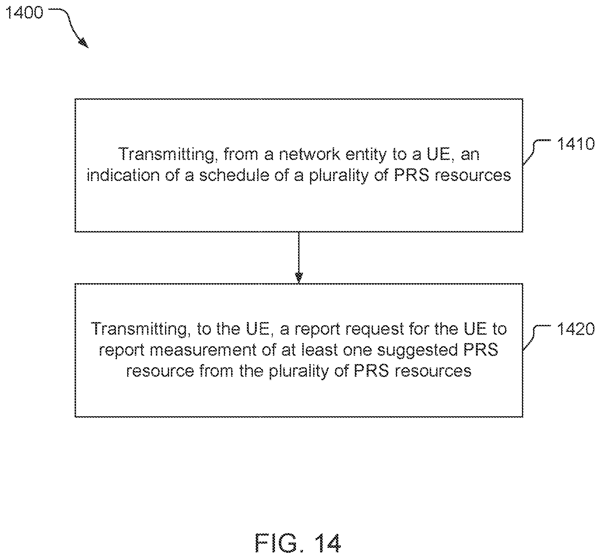

Referring to FIG. 14, with further reference to FIGS. 1-11, a method 1400 of requesting position information includes the stages shown. The method 1400 is, however, an example and not limiting. The method 1400 may be altered, e.g., by having stages added, removed, rearranged, combined, performed concurrently, and/or having single stages split into multiple stages.

At stage 1410, the method 1400 includes transmitting, from a network entity to a UE, an indication of a schedule of a plurality of PRS resources. For example, the PRS scheduling unit 650 transmits the assistance data 832 including the PRS schedule and/or transmits the revised PRS schedule 872 to the UE 500 (e.g., via the TRP 300). The processor 610, possibly in combination with the memory 630, in combination with the transceiver 620 (e.g., the wireless transmitter 442 and the antenna 446 and/or the wired transmitter 452) may comprise means for transmitting the indication of the schedule of PRS resources.

At stage 1420, the method 1400 includes transmitting, to the UE, a report request for the UE to report measurement of at least one suggested PRS resource from the plurality of PRS resources. For example, the PRS measurement/report requesting unit 660 transmits the PRS measurement report request 874 to the UE 500 to request high-priority measurement and/or reporting for one or more PRS resources. The request 874 may request an increase in measurement priority and/or reporting priority relative to another (e.g., a standard) measurement priority, another reporting priority, or another measurement and reporting priority. For example, the request 874 may indicate to the UE 500 for the UE 500 to ensure that the suggested PRS resource(s) is(are) in a measured and reported set of PRS resources, or ensure that the requested PRS resource(s) is(are) in a measured and reported set of PRS resources if the requested PRS resource(s) is(are) in a measured set of PRS resources. The processor 610, possibly in combination with the memory 630, in combination with the transceiver 620 (e.g., the wireless transmitter 442 and the antenna 446 and/or the wired transmitter 452) may comprise means for transmitting the report request.

Implementations of the method 1400 may include one or more of the following features. In an example implementation, the method 1400 comprises receiving, from the UE at the network entity, a PRS measurement report including one or more first measurements of one or more first PRS resources of the plurality of PRS resources and including an indication of one or more second PRS resources of the plurality of PRS resources corresponding to one or more second measurements made by the processor and omitted from the PRS measurement report, where transmitting the report request comprises transmitting the report request such that the at least one suggested PRS resource includes at least one of the one or more second PRS resources. For example, the PRS measurement/report requesting unit 660 uses the report 862 (which may comprise one message or multiple messages) of measured and reported PRS resources and measured but unreported PRS resources to determine which PRS resource(s) to request to be reported. The processor 610, possibly in combination with the memory 630, in combination with the transceiver 620 (e.g., the wireless receiver 444 and the antenna 446 and/or the wired receiver 454) may comprise means for receiving the PRS measurement report. In another example implementation, the indication of the schedule of the plurality of PRS resources is a first indication of a first schedule of PRS resources, and the method further comprises: receiving, from the UE, a PRS measurement report including one or more first measurements of one or more first PRS resources of the plurality of PRS resources and including an indication of one or more second PRS resources of the plurality of PRS resources corresponding to one or more second measurements made by the processor and omitted from the PRS measurement report; and transmitting, to the UE, a second indication of a second schedule of PRS resources including at least one of the one or more second PRS resources and having less than all, if any, of the one or more first PRS resources. For example, the PRS scheduling unit 650 uses the report 862 to determine and transmit the revised PRS schedule 872 to help ensure that one or more desired PRS resources are reported. The processor 610, possibly in combination with the memory 630, in combination with the transceiver 620 (e.g., the wireless receiver 444 and the antenna 446 and/or the wired receiver 454) may comprise means for receiving the PRS measurement report and the processor 610, possibly in combination with the memory 630, in combination with the transceiver 620 (e.g., the wireless transmitter 442 and the antenna 446 and/or the wired transmitter 452) may comprise means for transmitting the second indication of the second schedule of PRS resources. In another example implementation, the at least one suggested PRS resource includes a group of suggested PRS resources. PRS resources within the group may have a priority of reporting and/or measuring the indicated PRS resources. In another example implementation, the at least one suggested PRS resource includes a plurality of groups of suggested PRS resources. The groups may have a priority for reporting the groups.

### Other considerations

Other examples and implementations are within the scope of the appended claims. For example, due to the nature of software and computers, functions described above can be implemented using software executed by a processor, hardware, firmware, hardwiring, or a combination of any of these. Features implementing functions may also be physically located at various positions, including being distributed such that portions of functions are implemented at different physical locations.

As used herein, the singular forms "a," "an," and "the" include the plural forms as well, unless the context clearly indicates otherwise. The terms "comprises," "comprising," "includes," and/or "including," as used herein, specify the presence of stated features, integers, steps, operations, elements, and/or components, but do not preclude the presence or addition of one or more other features, integers, steps, operations, elements, components, and/or groups thereof.

As used herein, the term RS (reference signal) may refer to one or more reference signals and may apply, as appropriate, to any form of the term RS, e.g., PRS, SRS, CSI-RS, etc.

As used herein, unless otherwise stated, a statement that a function or operation is "based on" an item or condition means that the function or operation is based on the stated item or condition and may be based on one or more items and/or conditions in addition to the stated item or condition.

Also, as used herein, "or" as used in a list of items (possibly prefaced by "at least one of" or prefaced by "one or more of") indicates a disjunctive list such that, for example, a list of "at least one of A, B, or C," or a list of "one or more of A, B, or C" or a list of "A or B or C" means A, or B, or C, or AB (A and B), or AC (A and C), or BC (B and C), or ABC (i.e., A and B and C), or combinations with more than one feature (e.g., AA, AAB, ABBC, etc.). Thus, a recitation that an item, e.g., a processor, is configured to perform a function regarding at least one of A or B, or a recitation that an item is configured to perform a function A or a function B, means that the item may be configured to perform the function regarding A, or may be configured to perform the function regarding B, or may be configured to perform the function regarding A and B. For example, a phrase of "a processor configured to measure at least one of A or B" or "a processor configured to measure A or measure B" means that the processor may be configured to measure A (and may or may not be configured to measure B), or may be configured to measure B (and may or may not be configured to measure A), or may be configured to measure A and measure B (and may be configured to select which, or both, of A and B to measure). Similarly, a recitation of a means for measuring at least one of A or B includes means for measuring A (which may or may not be able to measure B), or means for measuring B (and may or may not be configured to measure A), or means for measuring A and B (which may be able to select which, or both, of A and B to measure). As another example, a recitation that an item, e.g., a processor, is configured to at least one of perform function X or perform function Y means that the item may be configured to perform the function X, or may be configured to perform the function Y, or may be configured to perform the function X and to perform the function Y. For example, a phrase of "a processor configured to at least one of measure X or measure Y" means that the processor may be configured to measure X (and may or may not be configured to measure Y), or may be configured to measure Y (and may or may not be configured to measure X), or may be configured to measure X and to measure Y (and may be configured to select which, or both, of X and Y to measure).

Substantial variations may be made in accordance with specific requirements. For example, customized hardware might also be used, and/or particular elements might be implemented in hardware, software (including portable software, such as applets, etc.) executed by a processor, or both. Further, connection to other computing devices such as network input/output devices may be employed. Components, functional or otherwise, shown in the figures and/or discussed herein as being connected or communicating with each other are communicatively coupled unless otherwise noted. That is, they may be directly or indirectly connected to enable communication between them.

The systems and devices discussed above are examples. Various configurations may omit, substitute, or add various procedures or components as appropriate. For instance, features described with respect to certain configurations may be combined in various other configurations. Different aspects and elements of the configurations may be combined in a similar manner. Also, technology evolves and, thus, many of the elements are examples and do not limit the scope of the disclosure or claims.

A wireless communication system is one in which communications are conveyed wirelessly, i.e., by electromagnetic and/or acoustic waves propagating through atmospheric space rather than through a wire or other physical connection. A wireless communication network may not have all communications transmitted wirelessly, but is configured to have at least some communications transmitted wirelessly. Further, the term "wireless communication device," or similar term, does not require that the functionality of the device is exclusively, or evenly primarily, for communication, or that communication using the wireless communication device is exclusively, or evenly primarily, wireless, or that the device be a mobile device, but indicates that the device includes wireless communication capability (one-way or two-way), e.g., includes at least one radio (each radio being part of a transmitter, receiver, or transceiver) for wireless communication.

Specific details are given in the description to provide a thorough understanding of example configurations (including implementations). However, configurations may be practiced without these specific details. For example, well-known circuits, processes, algorithms, structures, and techniques have been shown without unnecessary detail in order to avoid obscuring the configurations. This description provides example configurations, and does not limit the scope, applicability, or configurations of the claims. Rather, the preceding description of the configurations provides a description for implementing described techniques. Various changes may be made in the function and arrangement of elements.

The terms "processor-readable medium," "machine-readable medium," and "computer-readable medium," as used herein, refer to any medium that participates in providing data that causes a machine to operate in a specific fashion. Using a computing platform, various processor-readable media might be involved in providing instructions/code to processor(s) for execution and/or might be used to store and/or carry such instructions/code (e.g., as signals). In many implementations, a processor-readable medium is a physical and/or tangible storage medium. Such a medium may take many forms, including but not limited to, non-volatile media and volatile media. Non-volatile media include, for example, optical and/or magnetic disks. Volatile media include, without limitation, dynamic memory.

Having described several example configurations, various modifications, alternative constructions, and equivalents may be used. For example, the above elements may be components of a larger system, wherein other rules may take precedence over or otherwise modify the application of the disclosure. Also, a number of operations may be undertaken before, during, or after the above elements are considered. Accordingly, the above description does not bound the scope of the claims.

Unless otherwise indicated, "about" and/or "approximately" as used herein when referring to a measurable value such as an amount, a temporal duration, and the like, encompasses variations of ±20% or ±10%, ±5%, or +0.1% from the specified value, as appropriate in the context of the systems, devices, circuits, methods, and other implementations described herein. Unless otherwise indicated, "substantially" as used herein when referring to a measurable value such as an amount, a temporal duration, a physical attribute (such as frequency), and the like, also encompasses variations of ±20% or ±10%, ±5%, or +0.1% from the specified value, as appropriate in the context of the systems, devices, circuits, methods, and other implementations described herein.

A statement that a value exceeds (or is more than or above) a first threshold value is equivalent to a statement that the value meets or exceeds a second threshold value that is slightly greater than the first threshold value, e.g., the second threshold value being one value higher than the first threshold value in the resolution of a computing system. A statement that a value is less than (or is within or below) a first threshold value is equivalent to a statement that the value is less than or equal to a second threshold value that is slightly lower than the first threshold value, e.g., the second threshold value being one value lower than the first threshold value in the resolution of a computing system.

## Claims

1. A user equipment, UE, (500)comprising:
means (520) for receiving assistance data indicating a schedule of positioning reference signal, PRS, resources, wherein the number of PRS resources in the schedule is greater than the number of positioning measurements the UE is configured to report;
means (510, 530, 550) for measuring each of a first subset of the plurality of PRS resources, wherein the number of PRS resources in the schedule is greater than the number of positioning measurements the UE is configured to report;
means (510, 530, 550) for measuring a second subset of the plurality of PRS resources, the second subset being different than the first subset; and
means (510, 530, 560, 520) for transmitting, to a network entity, a PRS measurement report including one or more first measurements of the first subset of PRS resources, the PRS measurement report further including an indication of the second subset of PRS resources for which measurements were made but not included in the PRS measurement report.

2. The UE of claim 1, wherein the indication of the second subset of PRS resources comprises a PRS resource identity for each of the PRS resources of the second subset.

3. The UE of claim 1, wherein the PRS measurement report includes a further indication, corresponding to at least one PRS resource of the first subset, indicating whether the measurement of the at least one PRS resource of the first subset resulted from full processing of the respective PRS resources or partial processing of the respective PRS resources.

4. The UE of claim 3, wherein the further indication indicates whether the measurement of the at least one PRS resource of the first subst resulted from partial time processing of the respective PRS resources, or partial frequency processing of the respective PRS resources, or a combination thereof.

5. A method (1200) of measurement reporting for determination of a position of a user equipment, UE, the method comprising:
receiving assistance data indicating a schedule of positioning reference signal, PRS, resources, wherein the number of PRS resources in the schedule is greater than the number of positioning measurements the UE is configured to report;
measuring (1210), at the UE, each of a first subset of the plurality of PRS resources , the first subset of the plurality of PRS resources being respective PRS resources of the plurality of PRS resources prioritized for measurement reporting by the UE;
measuring, at the UE, a second subset of the plurality of PRS resources, received via the transceiver, the second subset being different than the first subset; and
transmitting (1220), from the UE to a network entity, a PRS measurement report including one or more first measurements of the first subset of PRS resources, the PRS measurement report further including an indication of the second subset of PRS resources for which measurements were made by the UE but not included in the PRS measurement report.

6. The method of claim 5, wherein the indication of the second subset of PRS resources comprises a PRS resource identity for each PRS resource of the second subset.

7. The method of claim 5, wherein the PRS measurement report includes a further indication, corresponding to at least PRS resource of the first subset, indicating whether the measurement of the at least one PRS resource of the first subset resulted from full processing of the respective PRS resource or partial processing of the respective PRS resource.

8. The method of claim 7, wherein the further indication indicates whether the measurement of the at least one PRS resource of the first subset resulted from partial time processing of the respective PRS resource, or partial frequency processing of the respective PRS resource, or a combination thereof.

9. A non-transitory, processor-readable storage medium comprising processor-readable instructions to cause a processor of a user equipment, UE, to carry out the method of any of claims 5 to 8.

10. A network entity (600) comprising:
means (620, 610, 650, 630) for transmitting, to a user equipment, UE, an indication of a schedule of a plurality of positioning reference signal, PRS, resources; and
means (620, 610, 660, 630) for transmitting, to the UE, a report request indicating that the UE prioritize reporting measurements of a subset of the plurality of PRS resources over reporting measurements of any other PRS resources in the plurality of PRS resources.

11. The network entity of claim 10, further comprising means for receiving, from the UE, a PRS measurement report including one or more measurements of a first subset of PRS resources of the plurality of PRS resources, the PRS measurement report further including an indication of a second subset of PRS resources for which the UE made measurements but omitted the measurements from the PRS measurement report, wherein the means for transmitting the report request configures the prioritized subset of the report request to include at least one of the second subset of PRS resources from the received PRS measurement report.

12. The network entity of claim 10, wherein the indication of the schedule of the plurality of PRS resources is a first indication of a first schedule of PRS resources, and wherein the network entity further comprises:
means for receiving, from the UE, a PRS measurement report including one or more first measurements of a first subset of PRS resources, the first subset of PRS resources prioritized by the UE for reporting, the PRS measurement report further including an indication of a second subset of PRS resources , the second subset different than the first subset and measured by the UE but the measurements of the second subset not included in the PRS measurement report; and
means for transmitting, to the UE, a second indication of a second schedule of PRS resources, the second schedule including at least one of the second subset of PRS resources and having less than all, if any, of the first subset of PRS resources.

13. The network entity of claim 10, wherein the prioritized subset includes at least one group of PRS resources.

14. A method (1400) of requesting position information, the method comprising:
transmitting (1410), from a network entity to a user equipment, UE, an indication of a schedule of a plurality of positioning reference signal, PRS, resources; and
transmitting, (1420) to the UE, a report request indicating that the UE prioritize reporting measurements of a subset of the plurality of PRS resources over reporting measurements of any other PRS resources in the plurality of PRS resources.

15. The method of claim 14, further comprising receiving, from the UE at the network entity, a PRS measurement report including one or more measurements of a first subset of PRS resources of the plurality of PRS resources, the PRS measurement report further including an indication of a second subset of PRS resources for which the UE made measurements but omitted the measurements from the PRS measurement report, wherein transmitting the report request configures the prioritized subset of the report request to include at least one of the one second subset of PRS resources from the received PRS measurement report.

## Patentansprüche

1. UE (User Equipment) (500), das Folgendes umfasst:
Mittel (520) zum Empfangen von Assistenzdaten, die einen Zeitplan für PRS-(Positioning Reference Signal)-Ressourcen angeben, wobei die Anzahl von PRS-Ressourcen im Zeitplan größer ist als die Anzahl von Positionsmesswerten, die zu melden das Endgerät konfiguriert ist;
Mittel (510, 530, 550) zum Messen jeder aus einem ersten Teilsatz der mehreren PRS-Ressourcen, wobei die Anzahl von PRS-Ressourcen im Zeitplan größer ist als die Anzahl von Positionsmesswerten, die zu melden das Endgerät konfiguriert ist;
Mittel (510, 530, 550) zum Messen eines zweiten Teilsatzes der mehreren PRS-Ressourcen, wobei sich der zweite Teilsatz vom ersten Teilsatz unterscheidet; und
Mittel (510, 530, 560, 520) zum Senden, zu einer Netzwerkentität, eines PRS-Messberichts, der einen oder mehrere erste Messwerte des ersten Teilsatzes von PRS-Ressourcen enthält, wobei der PRS-Messbericht ferner eine Angabe des zweiten Teilsatzes von PRS-Ressourcen enthält, für die Messungen durchgeführt wurden, deren Werte jedoch nicht im PRS-Messbericht enthalten sind.

2. UE nach Anspruch 1, wobei die Angabe des zweiten Teilsatzes von PRS-Ressourcen eine PRS-Ressourcen-Identität für jede der PRS-Ressourcen des zweiten Teilsatzes umfasst.

3. UE nach Anspruch 1, wobei der PRS-Messbericht eine weitere Angabe enthält, die mindestens einer PRS-Ressource des ersten Teilsatzes entspricht und angibt, ob der Messwert der mindestens einen PRS-Ressource des ersten Teilsatzes aus einer vollständigen Verarbeitung der jeweiligen PRS-Ressourcen oder einer teilweisen Verarbeitung der jeweiligen PRS-Ressourcen resultierte.

4. UE nach Anspruch 3, wobei die weitere Angabe angibt, ob der Messwert der mindestens einen PRS-Ressource des ersten Teilsatzes aus einer teilweisen Zeitverarbeitung der jeweiligen PRS-Ressourcen oder einer teilweisen Frequenzverarbeitung der jeweiligen PRS-Ressourcen oder einer Kombination davon resultierte.

5. Verfahren (1200) zur Messwertmeldung zum Bestimmen einer Position eines UE (User Equipment), wobei das Verfahren Folgendes beinhaltet:
Empfangen von Assistenzdaten, die einen Zeitplan für PRS-(Positioning Reference Signal)-Ressourcen angeben, wobei die Anzahl von PRS-Ressourcen im Zeitplan größer ist als die Anzahl von Positionsmesswerten, die zu melden das Endgerät konfiguriert ist;
Messen (1210), an dem UE, jeder aus einem ersten Teilsatz der mehreren PRS-Ressourcen, wobei der erste Teilsatz der mehreren PRS-Ressourcen jeweilige PRS-Ressourcen der mehreren PRS-Ressourcen sind, die für Messwertmeldung durch das UE priorisiert sind;
Messen, an dem UE, eines zweiten Teilsatzes der mehreren über den Transceiver empfangenen PRS-Ressourcen, wobei sich der zweite Teilsatz vom ersten Teilsatz unterscheidet; und
Senden (1220), vom UE zu einer Netzwerkentität, eines PRS-Messberichts, der einen oder mehrere erste Messwerte des ersten Teilsatzes von PRS-Ressourcen enthält, wobei der PRS-Messbericht ferner eine Angabe des zweiten Teilsatzes von PRS-Ressourcen enthält, für die Messungen von dem UE durchgeführt wurden, deren Werte jedoch nicht im PRS-Messbericht enthalten sind.

6. Verfahren nach Anspruch 5, wobei die Angabe des zweiten Teilsatzes von PRS-Ressourcen eine PRS-Ressourcen-Identität für jede PRS-Ressource des zweiten Teilsatzes umfasst.

7. Verfahren nach Anspruch 5, wobei der PRS-Messbericht eine weitere Angabe enthält, die mindestens einer PRS-Ressource des ersten Teilsatzes entspricht und angibt, ob der Messwert der mindestens einen PRS-Ressource des ersten Teilsatzes aus einer vollständigen Verarbeitung der jeweiligen PRS-Ressource oder einer teilweisen Verarbeitung der jeweiligen PRS-Ressource resultierte.

8. Verfahren nach Anspruch 7, wobei die weitere Angabe angibt, ob der Messwert der mindestens einen PRS-Ressource des ersten Teilsatzes aus einer teilweisen Zeitverarbeitung der jeweiligen PRS-Ressource oder einer teilweisen Frequenzverarbeitung der jeweiligen PRS-Ressource oder einer Kombination davon resultierte.

9. Nichtflüchtiges, prozessorlesbares Speichermedium, das prozessorlesbare Befehle umfasst, um einen Prozessor eines UE (User Equipment) zum Durchführen des Verfahrens nach einem der Ansprüche 5 bis 8 zu veranlassen.

10. Netzwerkentität (600), die Folgendes umfasst:
Mittel (620, 610, 650, 630) zum Senden, zu einem UE (User Equipment), einer Angabe eines Zeitplans von mehreren PRS-(Positioning Reference Signal)-Ressourcen; und
Mittel (620, 610, 660, 630) zum Senden, zu dem UE, einer Berichtsanforderung, die angibt, dass das UE die Meldung von Messwerten eines Teilsatzes der mehreren PRS-Ressourcen gegenüber der Meldung von Messwerten anderer PRS-Ressourcen der mehreren PRS-Ressourcen priorisieren soll.

11. Netzwerkentität nach Anspruch 10, die ferner Mittel zum Empfangen eines PRS-Messberichts vom UE umfasst, der einen oder mehrere Messwerte eines ersten Teilsatzes der mehreren PRS-Ressourcen enthält, wobei der PRS-Messbericht ferner eine Angabe eines zweiten Teilsatzes von PRS-Ressourcen enthält, für die das UE Messungen durchgeführt, diese jedoch im PRS-Messbericht weggelassen hat, wobei das Mittel zum Senden der Berichtsanforderung den priorisierten Teilsatz der Berichtsanforderung so konfiguriert, dass sie mindestens eine aus dem zweiten Teilsatz von PRS-Ressourcen aus dem empfangenen PRS-Messbericht enthält.

12. Netzwerkentität nach Anspruch 10, wobei die Angabe des Zeitplans der mehreren PRS-Ressourcen eine erste Angabe eines ersten Zeitplans von PRS-Ressourcen ist und wobei die Netzwerkentität ferner Folgendes umfasst:
Mittel zum Empfangen, von dem UE, eines PRS-Messberichts, der einen oder mehrere erste Messwerte aus einem ersten Teilsatz von PRS-Ressourcen enthält, wobei der erste Teilsatz von PRS-Ressourcen vom UE für die Berichterstattung priorisiert wurde, wobei der PRS-Messbericht ferner eine Angabe eines zweiten Teilsatzes von PRS-Ressourcen enthält, wobei sich der zweite Teilsatz vom ersten Teilsatz unterscheidet und vom UE gemessen wurde, die Messwerte des zweiten Teilsatzes jedoch nicht im PRS-Messbericht enthalten sind; und
Mittel zum Senden, zum UE, einer zweiten Angabe eines zweiten Zeitplans von PRS-Ressourcen, wobei der zweite Zeitplan mindestens eine aus dem zweiten Teilsatz von PRS-Ressourcen enthält und wenn überhaupt weniger als alle aus dem ersten Teilsatz von PRS-Ressourcen umfasst.

13. Netzwerkentität nach Anspruch 10, wobei der priorisierte Teilsatz mindestens eine Gruppe von PRS-Ressourcen umfasst.

14. Verfahren (1400) zum Anfordern von Positionsinformationen, wobei das Verfahren Folgendes beinhaltet:
Senden (1410), von einer Netzwerkentität zu einem UE (User Equipment), einer Angabe eines Zeitplans von mehreren PRS-(Positioning Reference Signal)-Ressourcen; und
Senden (1420), zu dem UE, einer Berichtsanforderung, die angibt, dass das UE die Meldung von Messwerten eines Teilsatzes der mehreren PRS-Ressourcen gegenüber der Meldung von Messwerten anderer PRS-Ressourcen der mehreren PRS-Ressourcen priorisieren soll.

15. Verfahren nach Anspruch 14, das ferner das Empfangen, von dem UE an der Netzwerkentität, eines PRS-Messberichts beinhaltet, der ein oder mehrere Messwerte eines ersten Teilsatzes von PRS-Ressourcen der mehreren PRS-Ressourcen enthält, wobei der PRS-Messbericht ferner eine Angabe eines zweiten Teilsatzes von PRS-Ressourcen enthält, für die das UE Messungen durchgeführt, diese jedoch im PRS-Messbericht weggelassen hat, wobei das Senden der Berichtsanforderung den priorisierten Teilsatz der Berichtsanforderung so konfiguriert, dass sie mindestens eine aus dem zweiten Teilsatz von PRS-Ressourcen aus dem empfangenen PRS-Messbericht enthält.

## Revendications

1. Équipement utilisateur, UE, (500) comprenant :
un moyen (520) de réception de données d'assistance indiquant un ordonnancement de ressources de signal de référence de positionnement, PRS, dans lequel le nombre de ressources de PRS dans l'ordonnancement est supérieur au nombre de mesures de positionnement que l'UE configuré est censé rapporter ;
un moyen (510, 530, 550) de mesure de chacun d'un premier sous-ensemble de la pluralité de ressources de PRS, dans lequel le nombre de ressources de PRS dans l'ordonnancement est supérieur au nombre de mesures de positionnement que l'UE configuré est censé rapporter ;
un moyen (510, 530, 550) de mesure d'un second sous-ensemble de la pluralité de ressources de PRS, le second sous-ensemble étant différent du premier sous-ensemble ; et
un moyen (510, 530, 560, 520) de transmission, à une entité de réseau, d'un rapport de mesures de PRS comportant une ou plusieurs premières mesures du premier sous-ensemble de ressources de PRS, le rapport de mesures de PRS comportant en outre une indication du second sous-ensemble de ressources de PRS pour lequel des mesures ont été réalisées mais n'ont pas été incluses dans le rapport de mesures de PRS.

2. UE selon la revendication 1, dans lequel l'indication du second sous-ensemble de ressources de PRS comprend une identité de ressource de PRS pour chacune des ressources de PRS du second sous-ensemble.

3. UE selon la revendication 1, dans lequel le rapport de mesures de PRS comporte une indication supplémentaire, correspondant à au moins une ressource de PRS du premier sous-ensemble, indiquant que la mesure de l'au moins une ressource de PRS du premier sous-ensemble résultait d'un traitement complet des ressources de PRS respectives ou d'un traitement partiel des ressources de PRS respectives.

4. UE selon la revendication 3, dans lequel l'indication supplémentaire indique que la mesure de l'au moins une ressource de PRS du premier sous-ensemble résultait d'un traitement temporel partiel des ressources de PRS respectives, ou d'un traitement fréquentiel partiel des ressources de PRS respectives, ou d'une combinaison des deux.

5. Procédé (1200) de présentation de rapport de mesures pour déterminer une position d'un équipement utilisateur, UE, le procédé comprenant :
la réception de données d'assistance indiquant un ordonnancement de ressources de signal de référence de positionnement, PRS, dans lequel le nombre de ressources de PRS dans l'ordonnancement est supérieur au nombre de mesures de positionnement que l'UE configuré est censé rapporter ;
la mesure (1210), au niveau de l'UE, de chacun d'un premier sous-ensemble de la pluralité de ressources de PRS, le premier sous-ensemble de la pluralité de ressources de PRS étant des ressources de PRS respectives de la pluralité de ressources de PRS priorisées pour un rapport de mesures par l'UE ;
la mesure, au niveau de l'UE, d'un second sous-ensemble de la pluralité de ressources de PRS, reçue par l'intermédiaire de l'émetteur-récepteur, le second sous-ensemble étant différent du premier sous-ensemble ; et
la transmission (1220), par l'UE à une entité de réseau, d'un rapport de mesures de PRS comportant une ou plusieurs premières mesures du premier sous-ensemble de ressources de PRS, le rapport de mesures de PRS comportant en outre une indication du second sous-ensemble de ressources de PRS pour lequel des mesures ont été réalisées par l'UE mais n'ont pas été incluses dans le rapport de mesures de PRS.

6. Procédé selon la revendication 5, dans lequel l'indication du second sous-ensemble des ressources de PRS comprend une identité de ressource de PRS pour chaque ressource de PRS du second sous-ensemble.

7. Procédé selon la revendication 5, dans lequel le rapport de mesures de PRS comporte une indication supplémentaire, correspondant à au moins une ressource de PRS du premier sous-ensemble, indiquant que la mesure de l'au moins une ressource de PRS du premier sous-ensemble résultait d'un traitement complet de la ressource de PRS respective ou d'un traitement partiel de la ressource de PRS respective.

8. Procédé selon la revendication 7, dans lequel l'indication supplémentaire indique que la mesure de l'au moins une ressource de PRS du premier sous-ensemble résultait d'un traitement temporel partiel de la ressource de PRS respective, ou d'un traitement fréquentiel partiel de la ressource de PRS respective, ou d'une combinaison des deux.

9. Support de stockage non transitoire lisible par processeur comprenant des instructions lisibles par processeur pour amener un processeur d'un équipement utilisateur, UE, à entreprendre le procédé selon l'une quelconque des revendications 5 à 8.

10. Entité de réseau (600) comprenant :
un moyen (620, 610, 650, 630) de transmission, à un équipement utilisateur, UE, d'une indication d'un ordonnancement d'une pluralité de ressources de signal de référence de positionnement, PRS ; et
un moyen (620, 610, 660, 630) de transmission, à l'UE, d'une demande de rapport indiquant que l'UE priorise le rapport de mesures d'un sous-ensemble de la pluralité de ressources de PRS plutôt que le rapport de mesures de toutes autres ressources de PRS dans la pluralité de ressources de PRS.

11. Entité de réseau selon la revendication 10, comprenant en outre un moyen de réception, à partir de l'UE, d'un rapport de mesures de PRS comportant une ou plusieurs mesures d'un premier sous-ensemble de ressources de PRS de la pluralité de ressources de PRS, le rapport de mesures de PRS comportant en outre une indication d'un second sous-ensemble de ressources de PRS pour lequel l'UE a réalisé des mesures a dans le rapport de mesures de PRS, dans lequel le moyen de transmission de la demande de rapport configure le sous-ensemble priorisé de la demande de rapport pour inclure au moins une du second sous-ensemble de ressources de PRS provenant du rapport de mesures de PRS reçu.

12. Entité de réseau selon la revendication 10, dans laquelle l'indication de l'ordonnancement de la pluralité des ressources de PRS est une première indication d'un premier ordonnancement de ressources de PRS, et dans lequel l'entité de réseau comprend en outre :
un moyen de réception, à partir de l'UE, d'un rapport de mesures de PRS comportant une ou plusieurs premières mesures d'un premier sous-ensemble de ressources de PRS, le rapport du premier sous-ensemble de ressources de PRS étant priorisé par l'UE, le rapport de mesures de PRS comportant en outre une indication d'un second sous-ensemble de ressources de PRS, le second sous-ensemble étant différent du premier sous-ensemble et étant mesuré par l'UE mais les mesures du second sous-ensemble n'étant pas incluses dans le rapport de mesures de PRS ; et
un moyen de transmission, à l'UE, d'une seconde indication d'un second ordonnancement de ressources de PRS, le second ordonnancement comportant au moins une du second sous-ensemble de ressources de PRS et présentant moins que la totalité, voire aucune, du premier sous-ensemble de ressources de PRS.

13. Entité de réseau selon la revendication 10, dans laquelle le sous-ensemble priorisé comporte au moins un groupe de ressources de PRS.

14. Procédé (1400) de demande d'informations de position, le procédé comprenant :
la transmission (1410), par une entité de réseau à un équipement utilisateur, UE, d'une indication d'un ordonnancement d'une pluralité de ressources de signal de référence de positionnement, PRS ; et
la transmission, (1420) à l'UE, d'une demande de rapport indiquant que l'UE priorise le rapport de mesures d'un sous-ensemble de la pluralité de ressources de PRS plutôt que le rapport de mesures de toutes autres ressources de PRS dans la pluralité de ressources de PRS.

15. Procédé selon la revendication 14, comprenant en outre la réception, à partir de l'UE au niveau de l'entité de réseau, d'un rapport de mesures de PRS comportant une ou plusieurs mesures d'un premier sous-ensemble de ressources de PRS de la pluralité de ressources de PRS, le rapport de mesures de PRS comportant en outre une indication d'un second sous-ensemble de ressources de PRS pour lequel l'UE a réalisé des mesures mais ne les a pas incluses dans le rapport de mesures de PRS, dans lequel la transmission de la demande de rapport configure le sous-ensemble priorisé de la demande de rapport pour inclure au moins une du second sous-ensemble de ressources de PRS provenant du rapport de mesures de PRS reçu.
